# EUROPEAN PATENT APPLICATION

(11) **EP 4 596 065 A1**
(43) Date of publication of application: **06.08.2025**
(21) Application number: 25153343.6
(22) Date of filing: 22.01.2025
(51) Int. Cl.: A63F 13/5258

(54) **INFORMATION PROCESSING PROGRAM, INFORMATION PROCESSING SYSTEM, INFORMATION PROCESSING APPARATUS, AND INFORMATION PROCESSING METHOD**

(30) Priority: 30.01.2024 JP 2024011603; 30.01.2024 JP 2024011604
(71) Applicant: Nintendo Co., Ltd., Kyoto 601-8501 (JP)
(72) Inventor: TOKURIKI, Youtarou, Kyoto, 601-8501 (JP); MORI, Yosuke, Kyoto, 601-8501 (JP); KURIHARA, Tatsuya, Kyoto, 601-8501 (JP); YAMANAKA, Yusaku, Kyoto, 601-8501 (JP)
(74) Representative: Bardehle Pagenberg Partnerschaft mbB Patentanwälte Rechtsanwälte

(57) **Abstract**

It is determined whether or not a positional relationship between a player character and a terrain object around the player character in a virtual space satisfies a permission condition. If the positional relationship does not satisfy the permission condition, then when a virtual camera approaches the terrain object, avoidance control to prevent the virtual camera from being located inside the terrain object is executed. If the positional relationship satisfies the permission condition, the virtual camera is controlled without executing the avoidance control. A portion of a surface of the terrain object that faces front with respect to the virtual camera is rendered.

## Description

### BACKGROUND OF THE INVENTION

### Field of the Invention

The present invention relates to an information processing program, information processing system, information processing apparatus, and information processing method that execute a process of displaying an image based on a virtual space as viewed from a virtual camera.

### Description of the Background Art

As disclosed in, for example, Japanese Laid-Open Patent Publication No. 2014-235596 (hereinafter referred to as Patent Document 1), there is a conventional information processing apparatus that displays an image of a virtual space as viewed from a virtual camera. When it seems that the virtual camera will be located inside another object, the information processing apparatus disclosed in Patent Document 1 moves the virtual camera to a location where the virtual camera is not brought into contact with that object.

However, in the information processing apparatus disclosed in Patent Document 1, the virtual camera is not allowed to be located inside another object even in a situation that if, when the virtual camera is located inside another object, that object is made transparent, visibility will be improved.

The present invention discloses an information processing program, information processing system, information processing apparatus, and information processing method that are capable of improving visibility, depending on a state of a player character.

### SUMMARY OF THE INVENTION

The present invention may have the following features (1) to (18), for example.
(1) An example configuration of an information processing program according to the present invention is executed by a computer of an information processing apparatus. The information processing program causes the computer to function as: determining means for determining whether or not a positional relationship between a player character and a terrain object around the player character in a virtual space satisfies a permission condition; virtual camera control means for, if the positional relationship does not satisfy the permission condition, then when a virtual camera approaches the terrain object, executing avoidance control to prevent the virtual camera from being located inside the terrain object, and if the positional relationship satisfies the permission condition, controlling the virtual camera without executing the avoidance control; terrain rendering means for rendering a portion of a surface of the terrain object that faces front with respect to the virtual camera; and image outputting means for executing a process of outputting, to a display device, an image for displaying based on a rendered image of the virtual space including the terrain object.

With the configuration of (1), it is determined whether or not to execute avoidance control to prevent a virtual camera from being located in a terrain object, based on a positional relationship between a player character and the terrain object around the player character. Therefore, an image whose visibility is improved according to a situation of a player character, can be displayed.

(2)
In the configuration of (1), the determining means may determine that the positional relationship satisfies the permission condition when the proportion of a surrounding of a position based on the player character that is masked by another object including the terrain object is greater than or equal to a threshold.

With the configuration of (2), if the masked proportion is high, it is considered that a player character is surrounded by another object, and the user desires to observe that object around the player character, and therefore, it can be appropriately determined that visibility is improved by placing a virtual camera inside a terrain object.

(3)
In the configuration of (1) or (2), the determining means may determine whether or not the positional relationship satisfies the permission condition, based on a distance between the player character and another object including the terrain object.

With the configuration of (3), it is considered that when a player character is masked by another object at a location far away from the player character, that state is similar to the state in which a player character is located outside a terrain object. In such a situation, if a virtual camera is located inside the terrain object, visibility may be reduced. Therefore, a virtual camera can be prevented from being located inside a terrain object in such a situation.

(4)
In any one of (1) to (3), the determining means may determine whether or not the positional relationship satisfies the permission condition with higher priority given to the positional relationship in a vertical direction of the virtual space than that given to the positional relationship in a horizontal direction of the virtual space.

With the configuration of (4), if a virtual camera is located inside a terrain object at a place where a player character is masked in the upward/downward direction, but not in the forward/backward direction and the leftward/rightward direction, visibility may be reduced. Therefore, a virtual camera can be prevented from being located inside a terrain object in such a situation.

(5)
In any of the configurations of (1) to (4), the information processing program may cause the computer to further function as: internal determining means for determining whether or not the virtual camera is located inside the terrain object; and display changing means for executing a display changing process of changing the image for displaying when determining that the virtual camera is located inside the terrain object.

With the configuration of (5), it can be easily recognized that an image captured by a virtual camera located inside a terrain object is displayed. An image suitable for seeing through a terrain object can be displayed.

(6)
In the configuration of (5), as the display changing process, the display changing means may execute a post-process on the rendered image of the virtual space including the terrain object.

With the configuration of (6), an image for displaying can be easily changed using a post-process when a virtual camera is located inside a terrain object.

(7)
In the configuration of (5), as the display changing process, the display changing means may place an object for changing in the virtual space.

With the configuration of (7), an image for displaying can be easily changed by providing an object for changing in a virtual space when a virtual camera is located inside a terrain object.

(8)
In the configuration of any of (5) to (7), as the display changing process, the display changing means may reduce visibility of an object located far away from the virtual camera.

With the configuration of (8), a game can be prevented from being too easy because an object located far away from a virtual camera is seen.

(9)
In the configuration of (8), as the display changing process, the display changing means may fog the object further away from the virtual camera such that the visibility thereof is reduced to a greater extent.

With the configuration of (9), an image that enables the user to recognize the distance to an object can be displayed.

(10)
In the configuration of any of (5) to (9), as the display changing process, the display changing means may change a display form of at least a portion of a non-front portion that is a portion of the surface of the terrain object which faces front and is not rendered.

With the configuration of (10), an image that enables the user to easily recognize that a virtual camera is located inside a terrain object can be displayed.

(11)
In the configuration of (10), as the display changing process, the display changing means may change the display form of at least a portion of the non-front portion by making a color of a background of the virtual space darker.

With the configuration of (11), it is possible to prevent displaying of an image that shows a light background even when a virtual camera is located inside a terrain object, and therefore, seems unnatural to the user.

(12)
In the configuration of (10) or (11), the display changing means may change a display form of an effect in the virtual space by the display changing process such that the effect is not displayed in the non-front portion.

With the configuration of (12), an image in which it is easy to recognize that a virtual camera is placed in a state different from that in which the virtual camera is located outside a terrain object, can be displayed.

(13)
In the configuration of any of (5) to (12), as the display changing process, the display changing means may highlight a contour of a cavity inside the terrain object.

With the configuration of (13), an image in which it is easy to recognize that a cavity is placed in a terrain object can be displayed. Even when objects in the distance are made less visible in order to prevent the user from seeing what is placed in a cavity, an image in which it is easy to recognize the presence of the cavity can be displayed, which can provide a target of the player character PC's action.

(14)
In the configuration of any of (5) to (13), as the display changing process, the display changing means may reduce visibility of an edge portion of the image for displaying.

With the configuration of (14), an image in which it is easy to recognize that a virtual camera is located inside a terrain object can be displayed. In addition, by making an edge portion of an image for displaying less visible, it is possible to prevent displaying of an image in which objects in the distance can be seen through a terrain object.

(15)
In the configuration of any of (5) to (14), the internal determining means may determine whether or not the virtual camera is located inside the terrain object, based on whether or not four corners of a near clip plane of the virtual camera are located inside the terrain object.

With the configuration of (15), when a region that is rendered using a virtual camera is present inside a terrain object, an image for displaying indicating that the virtual camera is located inside the terrain object is displayed. Therefore, an image compatible with a rendered region can be displayed.

(16)
In the configuration of any of (1) to (15), the virtual camera control means may automatically move the virtual camera such that the virtual camera is located inside the terrain object when the positional relationship satisfies the permission condition.

With the configuration of (16), it is possible to prevent generation of an image that is displayed with a player character being masked by a portion of the surface of a terrain object that faces front with respect to a virtual camera.

(17)
In the configuration of any of (1) to (15), the information processing program may cause the computer to further function as: see-through display means for, when the player character is masked by a portion of the surface of the terrain object that faces front when viewed from the virtual camera, displaying the player character in a manner that allows the player character to be seen through the portion of the surface.

With the configuration of (17), even when a player character is masked by a portion of the surface of a terrain object that faces front with respect to a virtual camera, an image in which the location of the player character can be recognized can be displayed.

(18)
In the configuration of any of (1) to (17), the information processing program may cause the computer to further function as: player character action control means for causing the player character to perform an action of breaking and/or deforming at least a portion of the terrain object, based on a user's operation input.

With the configuration of (18), in a game in which a player character is not allowed to break/deform a terrain object, the location of a virtual camera can be previously set that is suitable for a developer to display the player character. Meanwhile, in a game in which a player character is allowed to break/deform a terrain object, in such a form in which there is a difficulty in setting a virtual camera, an image having improved visibility can be displayed even when a player object is located in a narrow space in the terrain object in which the player character is allowed to break/deform the terrain object.

The present invention may also be carried out in the form of an information processing apparatus, information processing system, and information processing method.

According to the present invention, an image whose visibility is improved according to a situation of a player character can be displayed.

These and other features, aspects and advantages of the subject matter described herein will become more apparent from the following detailed description of the present exemplary embodiment when taken in conjunction with the accompanying drawings.

### BRIEF DESCRIPTION OF THE DRAWINGS

FIG. 1 is a diagram illustrating an example of a state where a left controller 3 and a right controller 4 are attached to a main body apparatus 2,
FIG. 2 is a diagram illustrating an example of a state where a left controller 3 and a right controller 4 are detached from a main body apparatus 2,
FIG. 3 illustrates six orthogonal views of an example of a main body apparatus 2,
FIG. 4 illustrates six orthogonal views of an example of a left controller 3,
FIG. 5 illustrates six orthogonal views of an example of a right controller 4,
FIG. 6 is a block diagram illustrating an example of an internal configuration of a main body apparatus 2,
FIG. 7 is a block diagram illustrating examples of internal configurations of a main body apparatus 2, a left controller 3, and a right controller 4,
FIG. 8 is a view showing an example of a terrain object, which is a voxel object,
FIG. 9 is a view showing an example before removal of a portion of the terrain object shown in FIG. 8,
FIG. 10 is a view showing an example after removal of a portion of the terrain object shown in FIG. 8,
FIG. 11 is a diagram showing an example of content of voxel data,
FIG. 12 is a diagram showing an example of property information representing properties of materials,
FIG. 13 is a diagram showing an example of texture information representing textures of materials,
FIG. 14 is a diagram showing an example of a method for generating a mesh,
FIG. 15 is a diagram showing an example of a game image including a terrain object,
FIG. 16 is a diagram showing an example in which a virtual camera C is provided in a first state in a game space in which a terrain object TO and a player character PC are set,
FIG. 17 is a diagram showing an example of a situation in which a portion of a terrain object TO has been removed by a player character PC,
FIG. 18 is a diagram showing an example of a destruction range of voxels to be broken in a terrain object TO,
FIG. 19 is a diagram showing an example in which a virtual camera C is provided in a second state in a game space in which a terrain object TO and a player character PC are set,
FIG. 20 is a diagram showing an example in which a virtual camera C is provided in a third state in a game space in which a terrain object TO and a player character PC are set,
FIG. 21 is a diagram for describing an example of the range of movement of a virtual camera C in the case in which a underground camera permission condition is not satisfied, and an example of the range of movement of a virtual camera C in the case in which the underground camera permission condition is satisfied,
FIG. 22 is a diagram showing an example of six views obtained from a location based on a player character PC in upward/downward, left/right, and forward/backward directions,
FIG. 23 is a diagram showing an example of an image for displaying that is displayed on a display 12 based on an image captured by a virtual camera C provided in a first state,
FIG. 24 is a diagram showing an example of an image for displaying that is displayed on a display 12 based on an image captured by a virtual camera C provided in a second state,
FIG. 25 is a diagram showing an example of an image for displaying that is displayed on a display 12 based on an image captured by a virtual camera C provided in a third state,
FIG. 26 is a diagram showing an example of four corner points P1 to P4 of a near clip plane of a virtual camera C,
FIG. 27 is a diagram showing an example of an image for displaying to which a fogging effect is applied based on the distance from a virtual camera C,
FIG. 28 is a diagram showing an example of an image for displaying in which the display form of a background portion of a game space is changed,
FIG. 29 is a diagram showing an example of various kinds of data for use in an information process in a game system 1,
FIG. 30 is a flowchart showing an example of a flow of a game process that is executed in a game system 1, and
FIG. 31 is a subroutine showing an example of an underground camera changing process of step S12 in the flowchart of FIG. 30.

### DESCRIPTION OF PREFERRED EMBODIMENTS

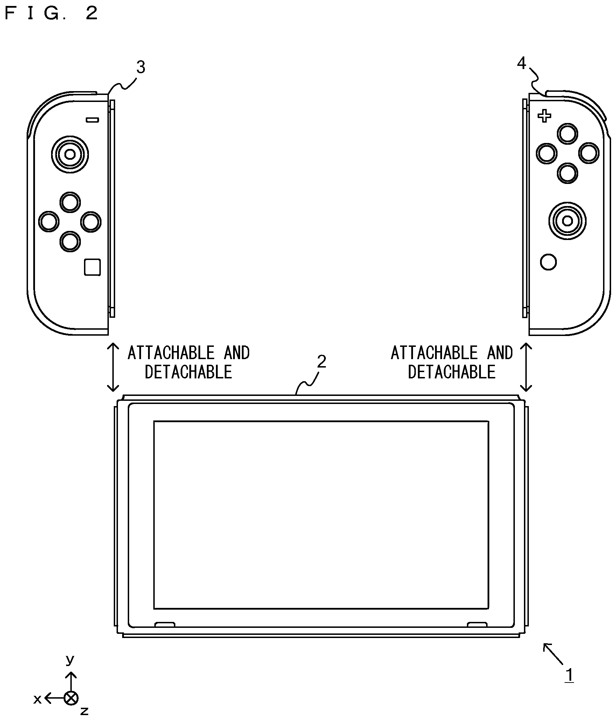

A game system according to the present embodiment will now be described. An example of a game system 1 according to the present embodiment includes a main body apparatus (information processing apparatus serving as the main body of a game apparatus in the present embodiment) 2, a left controller 3, and a right controller 4. The left controller 3 and the right controller 4 are attachable to and detachable from the main body apparatus 2. That is, the user can attach the left controller 3 and the right controller 4 to the main body apparatus 2, and use them as a unified apparatus. The user can also use the main body apparatus 2 and the left controller 3 and the right controller 4 separately from each other (see FIG. 2). In the description that follows, a hardware configuration of the game system 1 of the present embodiment is described, and thereafter, the control of the game system 1 of the present embodiment is described.

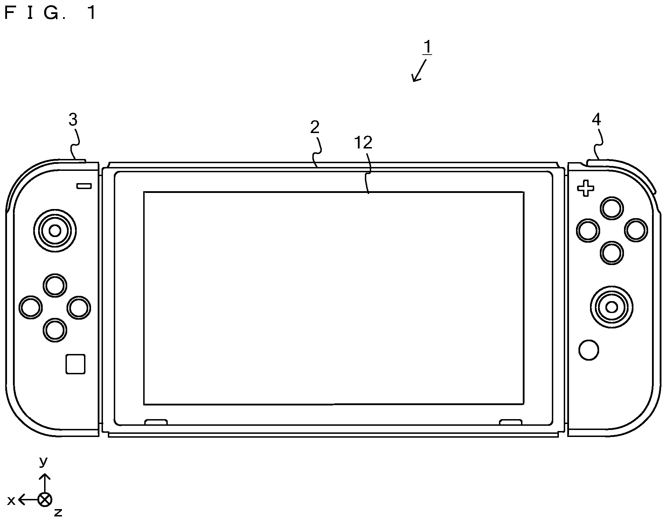

FIG. 1 is a diagram illustrating an example of the state where the left controller 3 and the right controller 4 are attached to the main body apparatus 2. As illustrated in FIG. 1, each of the left controller 3 and the right controller 4 is attached to and unified with the main body apparatus 2. The main body apparatus 2 is an apparatus for performing various processes (e.g., game processing) in the game system 1. The main body apparatus 2 includes a display 12. Each of the left controller 3 and the right controller 4 is an apparatus including operation sections with which a user provides inputs.

FIG. 2 is a diagram illustrating an example of the state where each of the left controller 3 and the right controller 4 is detached from the main body apparatus 2. As illustrated in FIGS. 1 and 2, the left controller 3 and the right controller 4 are attachable to and detachable from the main body apparatus 2. It should be noted that hereinafter, the left controller 3 and the right controller 4 will occasionally be referred to collectively as a "controller".

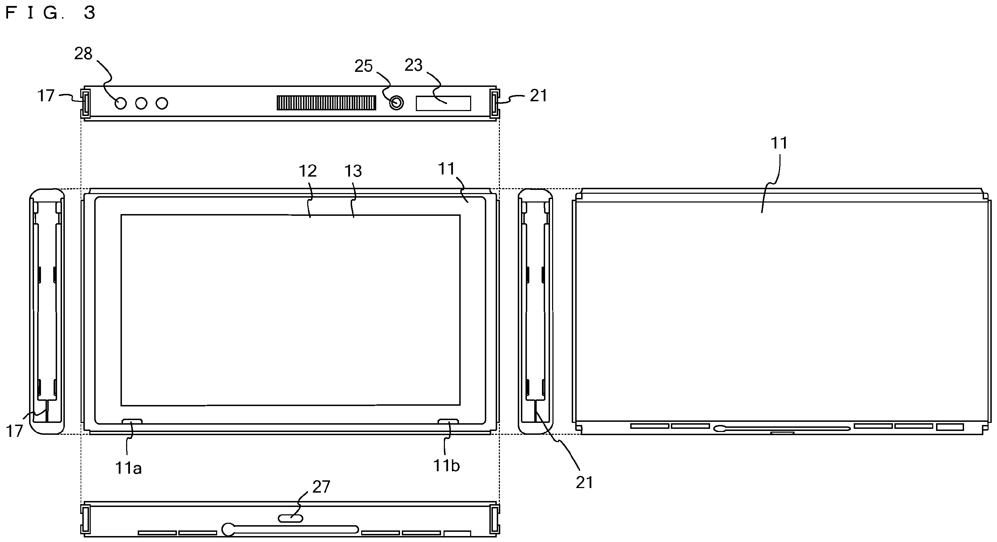

FIG. 3 illustrates six orthogonal views of an example of the main body apparatus 2. As illustrated in FIG. 3, the main body apparatus 2 includes an approximately plate-shaped housing 11. In the present embodiment, a main surface (e.g., a surface on a front side, such as a surface on which the display 12 is provided) of the housing 11 has a generally rectangular shape.

It should be noted that the shape and the size of the housing 11 are optional. As an example, the housing 11 may be of a portable size. Further, the main body apparatus 2 alone or the unified apparatus obtained by attaching the left controller 3 and the right controller 4 to the main body apparatus 2 may function as a mobile apparatus. The main body apparatus 2 or the unified apparatus may function as a handheld apparatus or a portable apparatus.

As illustrated in FIG. 3, the main body apparatus 2 includes the display 12, which is provided on the main surface of the housing 11. The display 12 displays an image generated by the main body apparatus 2. In the present embodiment, the display 12 is a liquid crystal display device (LCD). The display 12, however, may be a display device of any suitable type.

In addition, the main body apparatus 2 includes a touch panel 13 on the screen of the display 12. In the present embodiment, the touch panel 13 allows multi-touch input (e.g., a capacitive touch panel). It should be noted that the touch panel 13 may be of any suitable type, e.g., it allows single-touch input (e.g., a resistive touch panel).

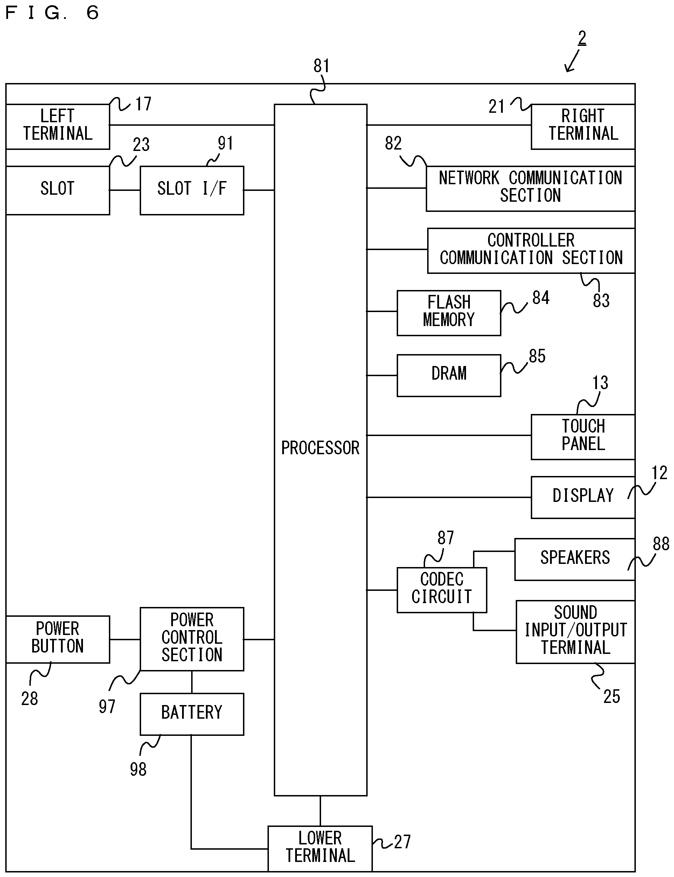

The main body apparatus 2 includes a speaker (e.g., a speaker 88 illustrated in FIG. 6) inside the housing 11. As illustrated in FIG. 3, speaker holes 11a and 11b are formed in the main surface of the housing 11. The speaker 88 outputs sounds through the speaker holes 11a and 11b.

The main body apparatus 2 also includes a left-side terminal 17 that enables wired communication between the main body apparatus 2 and the left controller 3, and a right-side terminal 21 that enables wired communication between the main body apparatus 2 and the right controller 4.

As illustrated in FIG. 3, the main body apparatus 2 includes a slot 23. The slot 23 is provided on an upper side surface of the housing 11. The slot 23 is so shaped as to allow a predetermined type of storage medium to be attached to the slot 23. The predetermined type of storage medium is, for example, a dedicated storage medium (e.g., a dedicated memory card) for the game system 1 and an information processing apparatus of the same type as the game system 1. The predetermined type of storage medium is used to store, for example, data (e.g., saved data of an application or the like) used by the main body apparatus 2 and/or a program (e.g., a program for an application or the like) executed by the main body apparatus 2. Further, the main body apparatus 2 includes a power button 28.

The main body apparatus 2 includes a lower-side terminal 27. The lower-side terminal 27 allows the main body apparatus 2 to communicate with a cradle. In the present embodiment, the lower-side terminal 27 is a USB connector (more specifically, a female connector). When the unified apparatus or the main body apparatus 2 alone is placed on the cradle, the game system 1 can display, on a monitor, an image that is generated and output by the main body apparatus 2. The monitor may be stationary or may be movable. Also, in the present embodiment, the cradle has the function of charging the unified apparatus or the main body apparatus 2 alone, being placed thereon. The cradle also functions as a hub device (specifically, a USB hub).

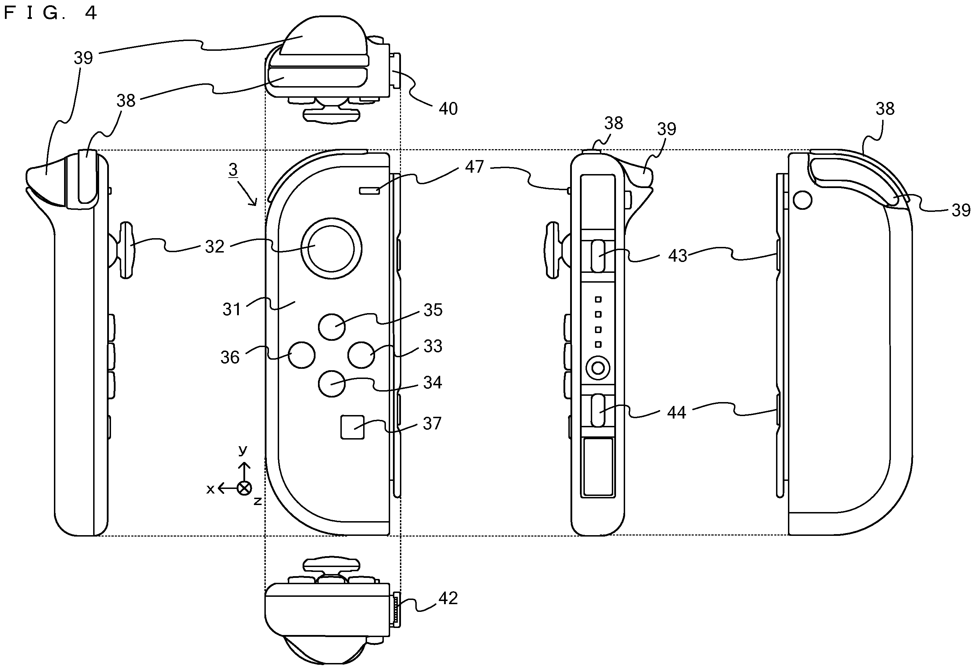

FIG. 4 illustrates six orthogonal views of an example of the left controller 3. As illustrated in FIG. 4, the left controller 3 includes a housing 31. In the present embodiment, the housing 31 has a vertically long shape. The housing 31 may be shaped to be long in an up-down direction e.g., along the y-axis direction illustrated in FIGS. 1 and 4. In the state where the left controller 3 is detached from the main body apparatus 2, the left controller 3 can also be held in the orientation in which the left controller 3 is vertically long. The housing 31 has such a shape and a size that when held in the orientation in which the housing 31 is vertically long, the housing 31 can be held with one hand, particularly the left hand. Further, the left controller 3 can also be held in the orientation in which the left controller 3 is horizontally long. When held in the orientation in which the left controller 3 is horizontally long, the left controller 3 may be held with both hands.

The left controller 3 includes an analog stick 32. As illustrated in FIG. 4, the analog stick 32 is provided on a main surface of the housing 31. The analog stick 32 can be used as a direction input section with which a direction can be input. The user tilts the analog stick 32 and thereby can input a direction corresponding to the direction of the tilt (and input a magnitude corresponding to the angle of the tilt). It should be noted that the left controller 3 may include a directional pad, a slide stick that allows a slide input, or the like as the direction input section, instead of the analog stick. Further, in the present embodiment, it is possible to provide an input by pressing the analog stick 32.

The left controller 3 includes various operation buttons. The left controller 3 includes four operation buttons 33 to 36 (specifically, a right direction button 33, a down direction button 34, an up direction button 35, and a left direction button 36) on the main surface of the housing 31. Further, the left controller 3 includes a record button 37 and a "-" (minus) button 47. The left controller 3 includes a first L-button 38 and a ZL-button 39 in an upper left portion of a side surface of the housing 31. Further, the left controller 3 includes a second L-button 43 and a second R-button 44, on the side surface of the housing 31 on which the left controller 3 is attached to the main body apparatus 2. These operation buttons are used to give instructions depending on various programs (e.g., an operating system (OS) program and an application program) executed by the main body apparatus 2.

The left controller 3 also includes a terminal 42 that enables wired communication between the left controller 3 and the main body apparatus 2.

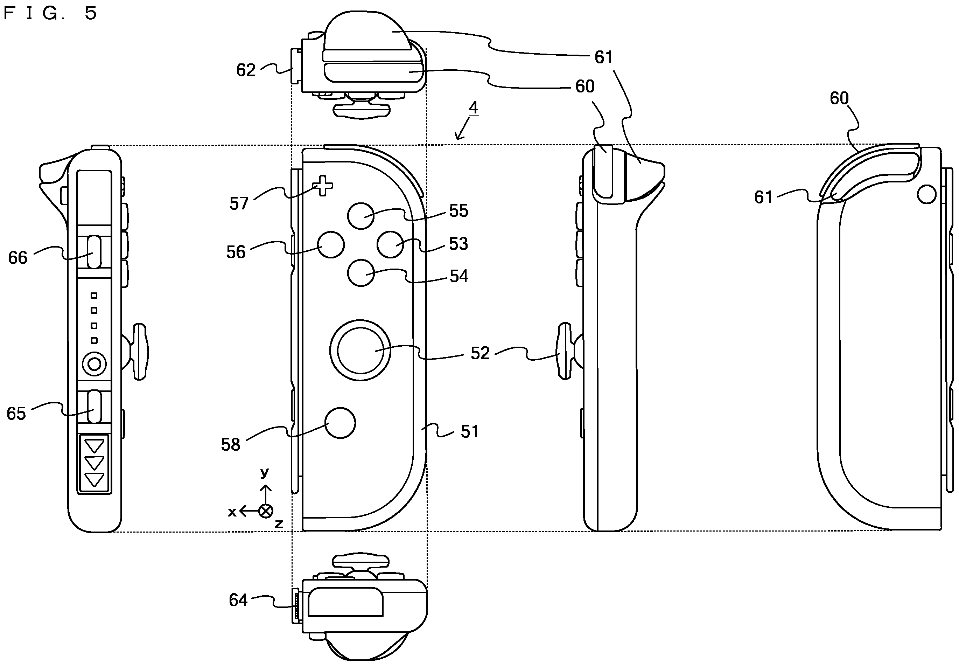

FIG. 5 illustrates six orthogonal views of an example of the right controller 4. As illustrated in FIG. 5, the right controller 4 includes a housing 51. In the present embodiment, the housing 51 has a vertically long shape. For example, the housing 51 may be shaped to be long in the up-down direction. In the state where the right controller 4 is detached from the main body apparatus 2, the right controller 4 can also be held in the orientation in which the right controller 4 is vertically long. The housing 51 has such a shape and a size that when held in the orientation in which the housing 51 is vertically long, the housing 51 can be held with one hand, particularly the right hand. Further, the right controller 4 can also be held in the orientation in which the right controller 4 is horizontally long. When held in the orientation in which the right controller 4 is horizontally long, the right controller 4 may be held with both hands.

Similarly to the left controller 3, the right controller 4 includes an analog stick 52 as a direction input section. In the present embodiment, the analog stick 52 has the same configuration as that of the analog stick 32 of the left controller 3. Further, the right controller 4 may include a directional pad, a slide stick that allows a slide input, or the like, instead of the analog stick. Further, similarly to the left controller 3, the right controller 4 includes four operation buttons 53 to 56 (specifically, an A-button 53, a B-button 54, an X-button 55, and a Y-button 56) on a main surface of the housing 51. Further, the right controller 4 includes a "+" (plus) button 57 and a home button 58. Further, the right controller 4 includes a first R-button 60 and a ZR-button 61 in an upper right portion of a side surface of the housing 51. Further, similarly to the left controller 3, the right controller 4 includes a second L-button 65 and a second R-button 66.

Further, the right controller 4 includes a terminal 64 for allowing the right controller 4 to perform wired communication with the main body apparatus 2.

FIG. 6 is a block diagram illustrating an example of an internal configuration of the main body apparatus 2. The main body apparatus 2 includes components 81 to 91, 97, and 98 illustrated in FIG. 6 in addition to the components illustrated in FIG. 3. Some of the components 81 to 91, 97, and 98 may be implemented as electronic parts on an electronic circuit board, which is contained in the housing 11.

The main body apparatus 2 includes a processor 81. The processor 81 is an information processor for executing various types of information processing to be executed by the main body apparatus 2. For example, the CPU 81 may include only a central processing unit (CPU), or may be a system-on-a-chip (SoC) having a plurality of functions such as a CPU function and a graphics processing unit (GPU) function. The processor 81 executes an information processing program (e.g., a game program) or other instructions that are stored in a storage (e.g., an internal non-transitory storage medium such as a flash memory 84, an external non-transitory storage medium that is attached to the slot 23, or the like), thereby executing the various types of information processing.

The main body apparatus 2 includes a flash memory 84 and a dynamic random access memory (DRAM) 85 as examples of internal storage media built in itself. The flash memory 84 and the DRAM 85 are connected to the CPU 81. The flash memory 84 is mainly used to store various data (or programs) to be saved in the main body apparatus 2. The DRAM 85 is used to temporarily store various data used in information processing. The DRAM 85 and the flash memory 84 are illustrative examples of non-transitory computer-readable media.

The main body apparatus 2 includes a slot interface (hereinafter abbreviated to "I/F") 91. The slot I/F 91 is connected to the processor 81. The slot I/F 91 is connected to the slot 23, and reads and writes data from and to a predetermined type of storage medium (e.g., a dedicated memory card) attached to the slot 23, in accordance with commands from the processor 81.

The processor 81 reads and writes, as appropriate, data from and to the flash memory 84, the DRAM 85, and each of the above storage media, thereby executing the above information processing.

The main body apparatus 2 includes a network communication section 82. The network communication section 82 is connected to the processor 81. The network communication section 82 communicates (specifically, through wireless communication) with an external apparatus via a network. In the present embodiment, as a first communication form, the network communication section 82 connects to a wireless LAN and communicates with an external apparatus, using a method compliant with the Wi-Fi standard. Further, as a second communication form, the network communication section 82 wirelessly communicates with another main body apparatus 2 of the same type, using a predetermined communication method (e.g., communication based on a particular protocol or infrared light communication). It should be noted that the wireless communication in the above second communication form achieves the function of allowing so-called "local communication", in which the main body apparatus 2 can wirelessly communicate with another main body apparatus 2 located in a closed local network area, and the plurality of main body apparatuses 2 directly communicate with each other to exchange data.

The main body apparatus 2 includes a controller communication section 83. The controller communication section 83 is connected to the processor 81. The controller communication section 83 wirelessly communicates with the left controller 3 and/or the right controller 4. The main body apparatus 2 may communicate with the left and right controllers 3 and 4 using any suitable communication method. In the present embodiment, the controller communication section 83 performs communication with the left and right controllers 3 and 4 in accordance with the Bluetooth (registered trademark) standard.

The processor 81 is connected to the left-side terminal 17, the right-side terminal 21, and the lower-side terminal 27. When performing wired communication with the left controller 3, the processor 81 transmits data to the left controller 3 via the left-side terminal 17 and also receives operation data from the left controller 3 via the left-side terminal 17. Further, when performing wired communication with the right controller 4, the processor 81 transmits data to the right controller 4 via the right-side terminal 21 and also receives operation data from the right controller 4 via the right-side terminal 21. Further, when communicating with the cradle, the processor 81 transmits data to the cradle via the lower-side terminal 27. As described above, in the present embodiment, the main body apparatus 2 can perform both wired communication and wireless communication with each of the left and right controllers 3 and 4. Further, when the unified apparatus obtained by attaching the left and right controllers 3 and 4 to the main body apparatus 2 or the main body apparatus 2 alone is attached to the cradle, the main body apparatus 2 can output data (e.g., image data or sound data) to a stationary monitor or the like via the cradle.

Here, the main body apparatus 2 can communicate with a plurality of left controllers 3 simultaneously (or in parallel). Further, the main body apparatus 2 can communicate with a plurality of right controllers 4 simultaneously (or in parallel). Thus, a plurality of users can simultaneously provide inputs to the main body apparatus 2, each using a set of left and right controllers 3 and 4. As an example, a first user can provide an input to the main body apparatus 2 using a first set of left and right controllers 3 and 4, and at the same time, a second user can provide an input to the main body apparatus 2 using a second set of left and right controllers 3 and 4.

Further, the display 12 is connected to the processor 81. The processor 81 displays, on the display 12, a generated image (e.g., an image generated by executing the above information processing) and/or an externally obtained image.

The main body apparatus 2 includes a codec circuit 87 and speakers (specifically, a left speaker and a right speaker) 88. The codec circuit 87 is connected to the speakers 88 and an audio input/output terminal 25 and also connected to the processor 81. The codec circuit 87 is for controlling the input and output of audio data to and from the speakers 88 and the sound input/output terminal 25.

The main body apparatus 2 includes a power control section 97 and a battery 98. The power control section 97 is connected to the battery 98 and the processor 81. Further, although not illustrated, the power control section 97 is connected to components of the main body apparatus 2 (specifically, components that receive power supplied from the battery 98, the left-side terminal 17, and the right-side terminal 21). Based on a command from the processor 81, the power control section 97 controls the supply of power from the battery 98 to each of the above components.

Further, the battery 98 is connected to the lower-side terminal 27. When an external charging device (e.g., the cradle) is connected to the lower-side terminal 27, and power is supplied to the main body apparatus 2 via the lower-side terminal 27, the battery 98 is charged with the supplied power.

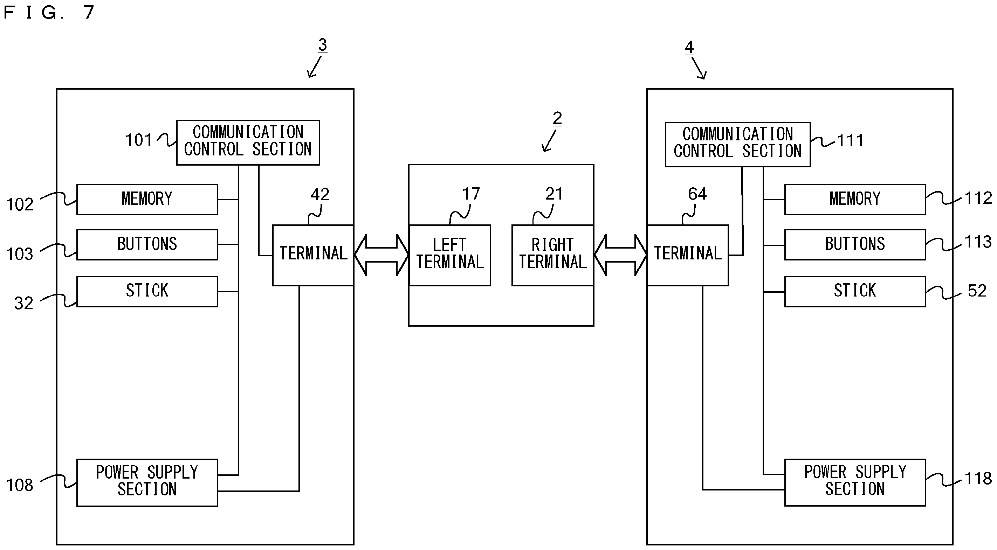

FIG. 7 is a block diagram illustrating examples of the internal configurations of the main body apparatus 2, the left controller 3, and the right controller 4. It should be noted that the details of the internal configuration of the main body apparatus 2 are illustrated in FIG. 6 and therefore are omitted in FIG. 7.

The left controller 3 includes a communication control section 101, which communicates with the main body apparatus 2. As illustrated in FIG. 7, the communication control section 101 is connected to components including the terminal 42. In the present embodiment, the communication control section 101 can communicate with the main body apparatus 2 through both wired communication via the terminal 42 and wireless communication without via the terminal 42. The communication control section 101 controls the method for communication performed by the left controller 3 with the main body apparatus 2. That is, when the left controller 3 is attached to the main body apparatus 2, the communication control section 101 communicates with the main body apparatus 2 via the terminal 42. Further, when the left controller 3 is detached from the main body apparatus 2, the communication control section 101 wirelessly communicates with the main body apparatus 2 (specifically, the controller communication section 83). The wireless communication between the communication control section 101 and the controller communication section 83 is performed in accordance with the Bluetooth (registered trademark) standard, for example.

Further, the left controller 3 includes a memory 102 such as a flash memory. The communication control section 101 includes, for example, a microcomputer (or a microprocessor) and executes firmware stored in the memory 102, thereby performing various processes.

The left controller 3 includes buttons 103 (specifically, the buttons 33 to 39, 43, 44, and 47). Further, the left controller 3 includes the analog stick ("stick" in FIG. 7) 32. Each of the buttons 103 and the analog stick 32 outputs information regarding an operation performed on itself to the communication control section 101 repeatedly at appropriate timing.

The communication control section 101 acquires information regarding an input (specifically, information regarding an operation or the detection result of the sensor) from each of input sections (specifically, the buttons 103 and the analog stick 32). The communication control section 101 transmits operation data including the acquired information (or information obtained by performing predetermined processing on the acquired information) to the main body apparatus 2. It should be noted that the operation data is transmitted repeatedly, once every predetermined time. It should be noted that the interval at which the information regarding an input is transmitted from each of the input sections to the main body apparatus 2 may or may not be the same.

The above operation data is transmitted to the main body apparatus 2, whereby the main body apparatus 2 can obtain inputs provided to the left controller 3. That is, the main body apparatus 2 can determine operations on the buttons 103 and the analog stick 32 based on the operation data.

The left controller 3 includes a power supply section 108. In the present embodiment, the power supply section 108 includes a battery and a power control circuit. Although not illustrated in FIG. 7, the power control circuit is connected to the battery and also connected to components of the left controller 3 (specifically, components that receive power supplied from the battery).

As illustrated in FIG. 7, the right controller 4 includes a communication control section 111, which communicates with the main body apparatus 2. Further, the right controller 4 includes a memory 112, which is connected to the communication control section 111. The communication control section 111 is connected to components including the terminal 64. The communication control section 111 and the memory 112 have functions similar to those of the communication control section 101 and the memory 102, respectively, of the left controller 3. Thus, a communication control section 111 can communicate with the main body apparatus 2 through both wired communication via the terminal 64 and wireless communication without via the terminal 64 (specifically, communication compliant with the Bluetooth (registered trademark) standard). The communication control section 111 controls the method for communication performed by the right controller 4 with the main body apparatus 2.

The right controller 4 includes input sections similar to the input sections of the left controller 3. Specifically, the right controller 4 includes buttons 113 and the analog stick 52. These input sections have functions similar to those of the input sections of the left controller 3 and operate similarly to the input sections of the left controller 3.

The right controller 4 includes a power supply section 118. The power supply section 118 has a function similar to that of the power supply section 108 of the left controller 3 and operates similarly to the power supply section 108.

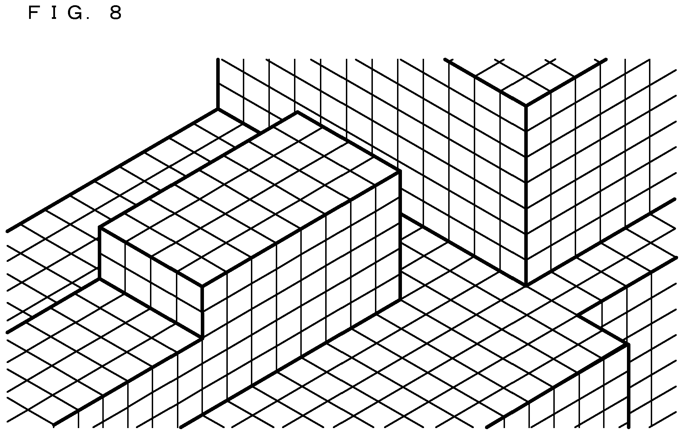

Next, referring to FIG. 8 to FIG. 15, an outline of the process performed on the game system 1 will be described. In the present embodiment, the game system 1 generates a game image in which terrain objects and characters (e.g., a player character that is controlled by the player) are arranged in a game space, which is a three-dimensional virtual space, and displays the game image on a display device. Note that in the present embodiment, the display device on which the game image is displayed may be the display 12 described above, or may be a stationary monitor.

In the present embodiment, for some objects in the game space, the shape is defined by voxel data. Here, voxels are rectangular parallelepiped (more specifically, cubic) regions arranged in a grid pattern in the game space, and voxel data is data that is set for each voxel. Hereinafter, an object whose shape is defined by voxel data will be referred to as a "voxel object". In the present embodiment, the game system 1 stores voxel data for each of a plurality of voxels that are set in the game space as data for generating voxel objects in the game space.

FIG. 8 is a view showing an example of a terrain object, which is a voxel object. As shown in FIG. 8, in the present embodiment, a terrain object representing a terrain such as a ground surface has its shape defined by voxel data. The cubes shown in FIG. 8 represent a terrain object. Note that in FIG. 8, edges of the terrain object are indicated by thick lines. However, the thick lines are added for the purpose of making the drawings easier to understand, and there is actually no need for edges of the terrain object to be drawn thick.

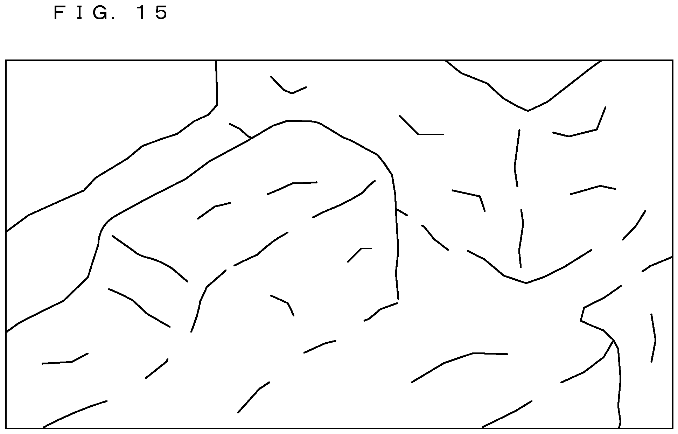

For example, the terrain object shown in FIG. 8 is generated by the following rule: "a cube is placed at the position of a voxel if a parameter included in the voxel data set for the voxel is greater than a predetermined value, and nothing is placed at the position of the voxel if the parameter is less than or equal to the predetermined value". The terrain object shown in FIG. 8 is shown for the purpose of illustrating the relationship between voxels and voxel objects in an easy-to-understand manner. Note however that in the present embodiment, in practice, a voxel object is generated by such a rule (e.g., based on the voxel data) that results in a terrain object having a complicated shape in comparison with the cubic voxels, such as a terrain object shown in FIG. 15 to be described below, for example. Note that there is no limitation on the rule for determining the shape of the voxel object based on the voxel data. In other embodiments, the game system 1 may generate a voxel object as shown in FIG. 8 based on the object data or may generate a voxel object as shown in FIG. 15 based on the object data.

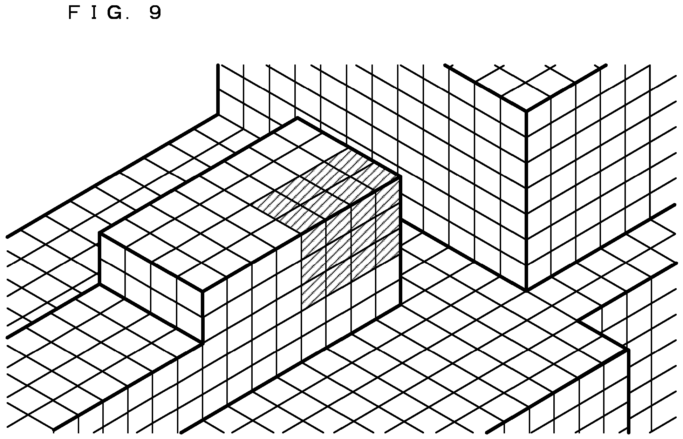

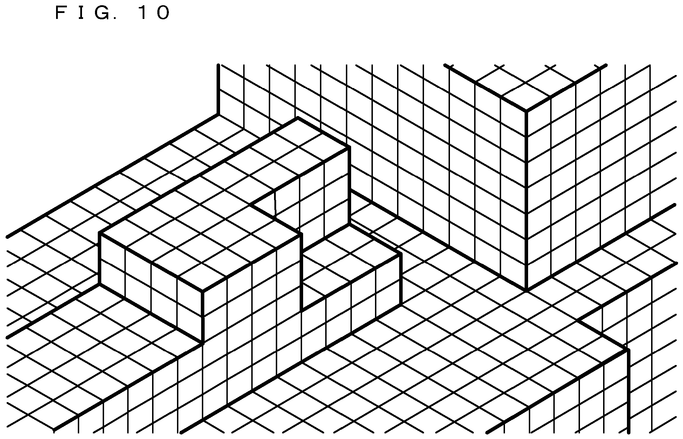

It is possible to change the shape of a voxel object by changing voxel data of voxels. FIG. 9 and FIG. 10 are views showing before and after the removal of a portion of the terrain object shown in FIG. 8. That is, when the hatched portion of the terrain object shown in FIG. 9 is broken, the terrain object changes to a shape as shown in FIG. 10. In such a case, the game system 1 can easily delete the terrain object by rewriting voxel data to be described below so as to indicate that the terrain object is absent for voxels in the hatched portion. Note that also when making an addition to the terrain object, as when deleting the terrain object, the game system 1 can easily change the shape of the terrain object by changing the voxel data of voxels.

Thus, the game system 1 can freely change the shape of a voxel object by rewriting the voxel data. For example, when the shape of a terrain object may be changed as a result of the terrain object in a game being broken for some reason (e.g., the player character striking the terrain object), the game system 1 can freely change the shape of the terrain object by changing the voxel data used to generate the terrain object, rather than directly changing data representing the outer shape of the terrain object (e.g., the mesh to be described below).

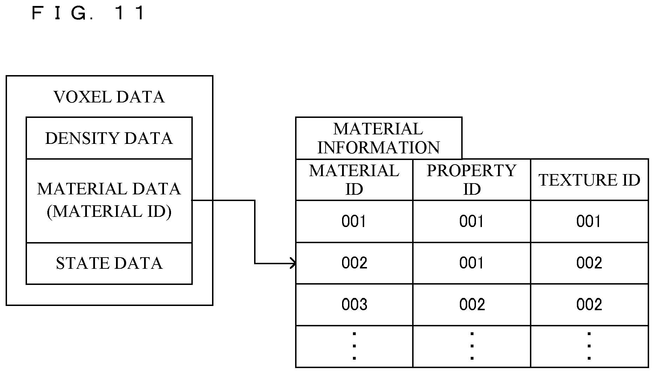

FIG. 11 is a diagram showing an example of content of voxel data. Here, in the present embodiment, the game space can be divided into a plurality of voxels arranged in a grid pattern. The game system 1 stores voxel data for each voxel in the game space so that the voxel data is associated with the voxel. The voxel data represents, for example, the presence/absence of a voxel object in the voxel corresponding to the voxel data.

As shown in FIG. 11, voxel data includes density data. The density data represents a density that indicates the degree to which an object is included in a region defined by each voxel. As will be described in detail below, the position and the shape of the surface of the voxel object (e.g., the mesh to be described below) are determined based on this density. In other words, in the present embodiment, this density is also data that is used to generate a mesh that defines the surface of the voxel object.

In the present embodiment, the density can take an integer value in the range from the lower limit value (e.g., 0) to the upper limit value (e.g., 255). In the present embodiment, in the game system 1, the proportion of the volume to be occupied by the voxel object in a voxel tends to be higher when the density value set for the voxel is higher, and the proportion in a voxel tends to be lower when the density value is lower. For example, if the density is 0, there is no voxel object in the voxel, if the density is 255, the inside of the voxel is entirely the object, and if the density is between 0 and 255, the inside of the voxel is occupied by the object to the proportion that is determined based on the density value. Then, the shape of the voxel mesh, e.g., the shape of the voxel object, is determined based on the density. Note however that the shape of the voxel object generated based on the density does not need to have a volume that exactly matches the proportion represented by the density. For example, the method of generating a voxel object as shown in FIG. 8 and the method of generating a voxel object as shown in FIG. 15 may differ in the volume of the voxel object, even if they are based on the same density.

Note that in other embodiments, the density may indicate either a state in which the voxel object occupies the entirety of the region within the voxel or a state in which no voxel object is included in the region within the voxel. For example, the density data may be data that can take only one of 0 or 1.

As shown in FIG. 11, voxel data includes material data. The material data represents the material (e.g., the substance) of the voxel object generated by the voxel data. Here, in the present embodiment, materials such as sand, rock and soil, for example, are set for voxel objects. That is, in the present embodiment, a plurality of types of materials are provided as materials that can be set for a voxel object, and one of the materials is set for a voxel object.

As shown in FIG. 11, in the present embodiment, the material data represents the identification information of the material (referred to as "material ID"). In the present embodiment, the game system 1 stores material information representing the property and the texture of the material for each material provided in the game. In the present embodiment, the material information represents associations between the material ID, the property of the material and the appearance (specifically, the texture) of the material. Specifically, the material information is information that represents associations between the material ID, identification information of the property of the material (referred to as "property ID") and identification information of the texture of the material (referred to as "texture ID") (see FIG. 11).

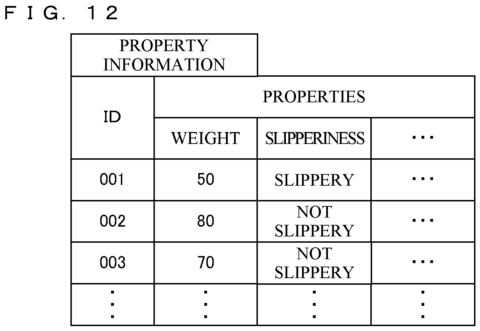

FIG. 12 is a diagram showing an example of property information representing properties of materials. As shown in FIG. 12, the game system 1 stores property information that associates each property ID with information that represents the content of the property represented by the property ID. A property of a material is a property of a voxel object for which the material is set in the game, and it may be information such as weight or slipperiness shown in FIG. 12, for example. Note that there is no limitation on the specific content of the property. For example, the following information may be set as properties of a material.
· Temperature
· Breakability (e.g., the number of times of impact impartation needed to break a voxel object)
· Whether another object can be bonded to a voxel object
· Amount of hit points to be regained by the player character when the player character breaks a voxel object
· Amount of in-game currency to be gained by the player character when the player character breaks a voxel object

Note that there is no limitation on the specific content of the property to be set for a material. In other embodiments, information different from those listed above may be set as information that represents a property of a material.

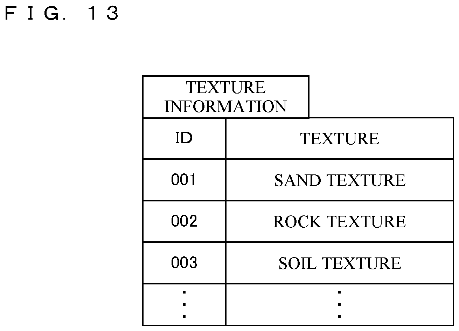

FIG. 13 is a diagram showing an example of texture information representing textures of materials. As shown in FIG. 13, the game system 1 stores texture information that associates the texture ID with the texture represented by the texture ID.

Note that in addition to information of texture, any information regarding the color and/or pattern may be set as data that defines the appearance of a voxel object. For example, a pattern of cracks may be set as information regarding the appearance of a voxel object. By using such a pattern, the game system 1 can generate an image of a voxel object that represents the appearance of cracks.

As described above, in the present embodiment, the material data defines, by the material ID, the property of the voxel object and the texture used for the voxel object. For example, when the material ID represented by the material data included in the voxel data is "002", the property represented by the property ID "001" that is associated with the material ID in the material information is set as the property of the voxel object corresponding to the voxel data (see arrow shown in FIG. 11). In this case, the texture that is represented by the texture ID "002" associated with the material ID in the material information is applied to the voxel object corresponding to the voxel data (see arrow shown in FIG. 11).

As described above, in the present embodiment, the game system 1 separately manages the property and the texture of the material. Therefore, in the present embodiment, it is possible to easily set a plurality of types of materials having the same property but having different appearances (e.g., different textures) or set a plurality of types of materials having different properties but having the same appearance.

Note that the material data may be any data with which it is possible to identify the property and/or the texture of the material. For example, in other embodiments, the material data may represent the property ID and the texture ID, or may have a data structure that actually includes data representing the property and the texture of the material.

The material data may further represent information related to the material other than the property and the texture described above. For example, the material data may include special effect data that represents the special effect to be triggered upon satisfaction of a special effect triggering condition set for the voxel object (e.g., a portion of the voxel object being broken, or the character stepping on the voxel object). Note that the special effect data may be data that represents a special effect image (e.g., a special effect image showing the voxel object being broken), or may be data that represents a special effect sound (a sound of footstep when the character walks on the voxel object).

As shown in FIG. 11, the voxel data includes state data that represents the state of the voxel object. There is no limitation on the specific content of the state data. For example, the state data may be data that represents whether the voxel object is in a wet state, or may be data that represents the amount of damage applied to the voxel object. The content of the state data may be updated during the game.

In the present embodiment, the surface of the voxel object is represented by a mesh. A mesh is a set of faces (specifically, polygons) placed in the game space. In the present embodiment, the game system 1 generates a mesh for the voxel object based on the voxel data of each voxel set in the game space. An example of how a mesh is generated based on voxel data will now be described.

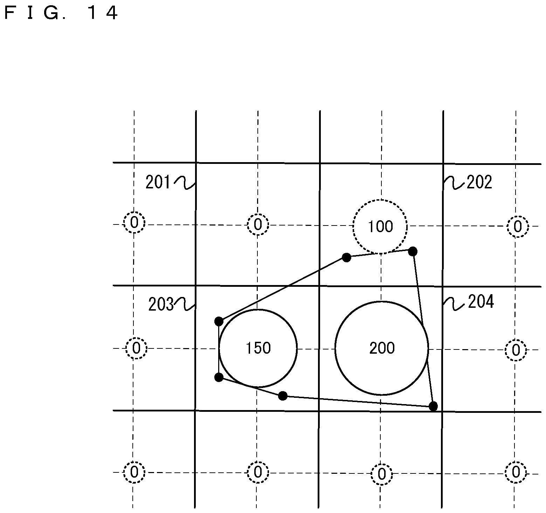

FIG. 14 is a diagram showing an example of a method for generating a mesh. Note that in FIG. 14, voxels and meshes are represented in two dimensions for the purpose of making the drawing easier to understand and for the sake of discussion, but in practice, a three-dimensional mesh is generated based on voxels in a three-dimensional space.

As described above, in the present embodiment, the density set for the voxel is in the range of 0 to 255. In the present embodiment, voxels with densities equal to or greater than the reference value are considered to be inside the voxel object, and voxels with densities less than the reference value are considered to be outside the voxel object. It is not necessary to define only voxels with a density of 0 as being outside the voxel object (e.g., reference value = 1), and the reference value may be set to 128, for example. In the example shown in FIG. 14, a voxel 201 and the other outer voxels have a density of 0, a voxel 202 has a density of 100, which is less than the reference value, and voxels 203 and 204 have densities of 150 and 200, which are greater than the reference value. In the present embodiment, the game system 1 generates vertices between those voxels whose densities are equal to or greater than the reference value and those voxels whose densities are less than the reference value. Specifically, for each region (region delimited by dotted lines) that straddles eight (four in the figure) adjacent voxels, it is determined whether or not to generate a vertex. That is, a vertex is generated in each region that straddles both a voxel whose density is equal to or greater than the reference value and a voxel whose density is less than the reference value. Then, a polygon mesh is generated by connecting together adjacent vertices if the connection (the boundary between the regions including the vertices) passes through a voxel whose density is equal to or greater than the reference value and a voxel whose density is less than the reference value.

The coordinates of each vertex are determined by comparing densities of adjacent voxels and interpolating based on the difference in density for each of the XYZ axes. In this process, the coordinates can be further calculated based on the normal information. The normal information may be stored in advance for at least some of the voxels, or if not stored, the normal information may also be calculated based on densities between adjacent voxels. Note that in FIG. 14, the density of the voxel 202 is less than the reference value, the voxel 202 is treated as being outside the voxel object in the determination of the presence/absence of a vertex, but the density value itself of the voxel 202 is used to calculate the coordinates of the vertices generated. If the reference value were set to a value lower than the density of the voxel 202, it would result in an increase in the vertices on the upper right side and the upper left side in the voxel 202 of FIG. 14.

By generating a polygon mesh as described above, it is possible to generate a shape whose volume reflects the density of each voxel to some extent. Note however that depending on the relationship with neighboring voxels, it is possible that a voxel with a density of 0 may partially include a region inside the voxel object, or a voxel with a density of 255 may partially include a region outside the voxel object. Since voxels with densities less than the reference value are treated as being outside the voxel object in the present embodiment, there are fewer vertices as compared with a case where those voxels are treated as being inside the voxel object, the volume will be smaller accordingly. That is, there is no need to calculate the polygon mesh so that the volume strictly corresponds to the density value.

FIG. 15 shows an example of a game image including a terrain object. In the present embodiment, by generating a mesh as described above, the voxel object can be made in a shape with complicated irregularities compared to the cubic voxels, for example.

Note that there is no limitation on the method of generating a mesh based on voxel data. For example, in other embodiments, if the density of the voxel data is greater than a predetermined value, a mesh may be generated so that a cube is placed in the voxel (see FIG. 8).

For each face of the mesh generated as described above, the game system 1 determines the appearance (e.g., color and/or pattern) of each such face according to the material identified by the voxel data. Specifically, the game system 1 determines the texture to be used for rendering each face of the mesh based on the voxel data, and maps the determined texture to each face to generate an image of the voxel object. Note that the texture to be mapped to each face of the mesh is determined based on the voxel data of the voxel used to generate the face (which will be referred to as the target voxel) among the voxels where the voxel object exists. Note that the target voxel is, for example, one or more voxels located around the face, although it depends on the mesh generation method. That is, the texture mapped to a face of the mesh is determined to be a texture corresponding to the material set for one or more voxels placed around the face.

Note that in other embodiments, one voxel data may include multiple types (e.g., two types) of material data. In such a case, the voxel data includes ratio data related to the multiple types of material data. The ratio data is data for determining the texture to be used for the voxel object, and represents the ratio by which each of the materials (specifically, the texture corresponding to the material) represented by the multiple types of material data influences the appearance (specifically, the color and/or pattern) of the voxel object. When determining the texture to be mapped to each face of the mesh, the texture is determined based on various data (specifically, density data, multiple types of material data and ratio data) included in the voxel data of the target voxel. For example, when multiple types of materials are set for a target voxel corresponding to one face, a texture corresponding to the (one type of) material with the greatest degree of influence may be used while taking the ratio into consideration, or textures corresponding to multiple types of materials may be used while taking the ratio into consideration.

In other embodiments, there may be both voxel objects for which voxel data including one type of material data is used, and voxel objects for which voxel data including two types of material data is used.

As described above, in the present embodiment, the game system 1 sets the color and/or pattern of the mesh of the voxel object based on appearance data (specifically, a texture ID representing a texture) that defines the color and/or pattern of the voxel object for each voxel. Specifically, for a mesh to be generated based on voxel data of a certain voxel, among meshes of voxel objects, the game system 1 applies the texture represented by the appearance data for the voxel to the mesh of the voxel object that is generated based on the voxel data for the certain voxel. Thus, it is possible to set the color and/or pattern of the voxel object using the appearance data set for the voxel.

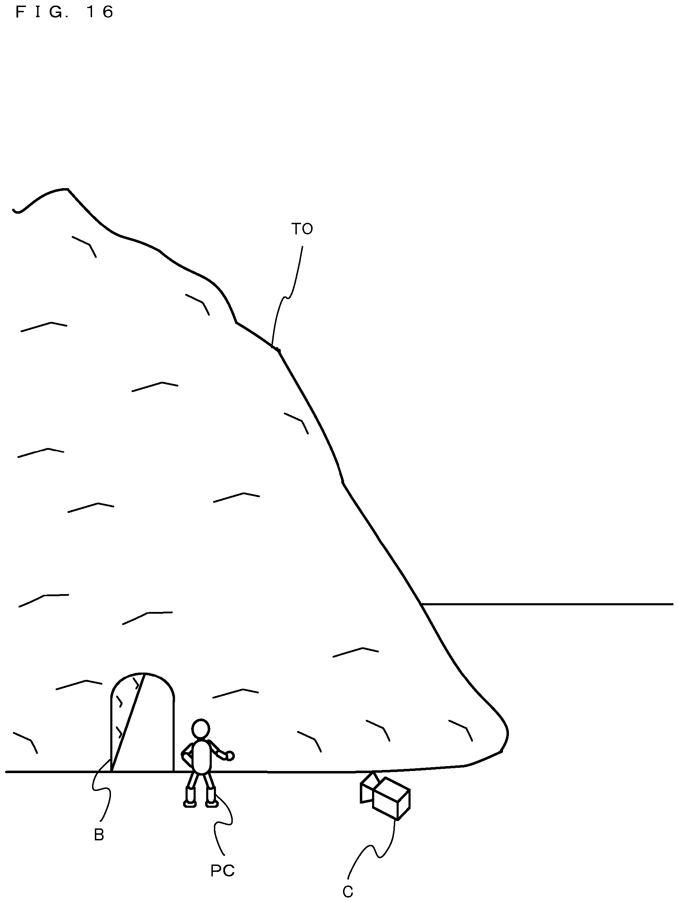

Next, an example of game play in which a player character is operated in a game space according to the user's operation performed on the game system 1 will be described with reference to FIGS. 16 to 28. For example, in the present invention, a player character PC appearing in the game space displayed on the display 12 is operated according to the user's operation performed on the operation buttons and sticks of the left controller 3 and/or the right controller 4 of the game system 1 in the unified form, the user's touch operation performed on the touch panel 13 of the main body apparatus 2, the user's operation of moving the entire game system 1 or changing the orientation of the game system 1, and the like.

FIG. 16 is a diagram showing an example in which a virtual camera C is provided in a first state in a game space in which a terrain object TO and the player character PC are set. Examples of the terrain object TO include not only natural objects or natural regions made of a ground, cliff, rock, and the like, but also artificial objects such as buildings and paved surfaces. The terrain object TO is made of a voxel object that is generated based on the above voxel data, and the surface of which is represented by a mesh. For example, a voxel space in which voxels are specified is set in the game space, and the terrain object TO is generated in the game space by a plurality of voxels specified in the voxel space. Here, at least one voxel space is set in at least a portion of the game space in order to specify a plurality of voxels. For each voxel space, the length (resolution) of an edge of a voxel, the vectors (orientations) of the x-, y-, and z-axes of a global coordinate system in a vector space, the length of the voxel space in each of the x-, y-, and z-directions, and a location of the voxel space in the game space, and the like are specified. Although FIG. 16 shows an example in which rendering is performed by generation of a mesh having an appearance as shown in FIG. 15 using the technique described with reference to FIG. 14, rendering may be performed using a block mesh described with reference to FIG. 9 or 10.

In the present invention, an image for displaying based on an image (virtual space image) captured by the virtual camera C provided in the game space is displayed on a display device (e.g., the display 12). For example, the virtual camera C is located in a range of movement that is defined with reference to the location of the player character PC in the game space. The player character PC can be moved in the game space according to the user's operation, and the range of movement is also moved in the game space according to the player character PC's movement. In addition, the virtual camera C can be moved in the range of movement according to the user's operation. Therefore, the location of the virtual camera C can be moved in the game space according to each of the user's operation of moving the player character PC and the user's operation of moving the location of the virtual camera C.

In the present invention, the player character PC can, for example, be moved into a cave, cavity, or the like that is previously formed in the terrain object TO, or a cave or the like that is formed by the player character PC breaking and/or deforming a portion of the terrain object TO, such as a cave B shown in FIG. 16. For example, at least a portion of the terrain object TO can be broken to disappear (to be removed) by the player character PC performing an action of breaking the terrain object TO. As an example, the terrain object TO can be broken such that the terrain object TO is partially removed, by the player character PC performing an action of hitting a portion of the terrain object TO.

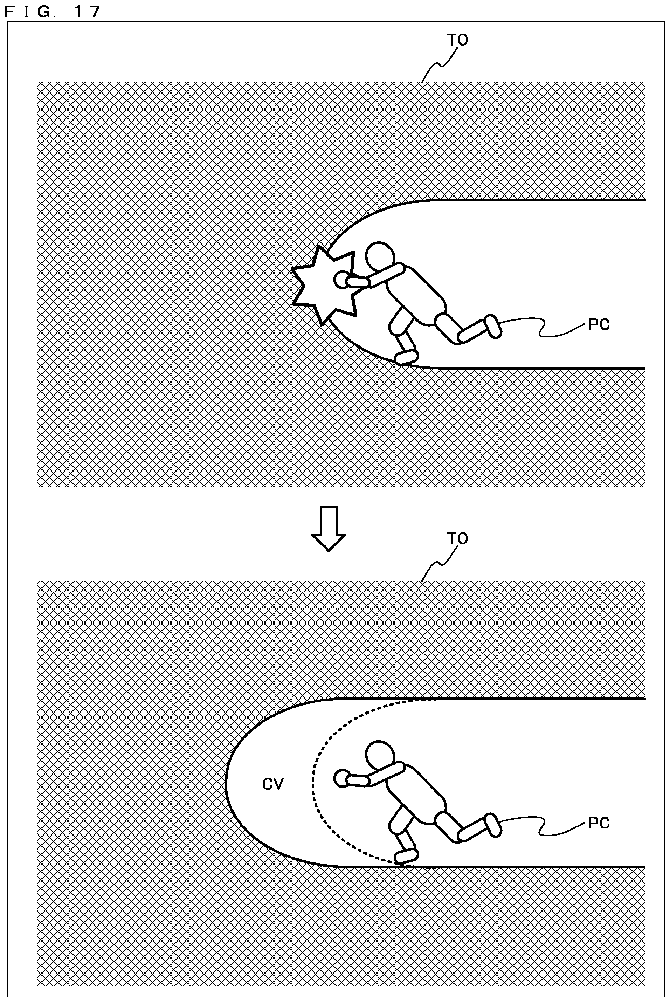

FIG. 17 is a diagram showing an example of a situation in which a portion of the terrain object TO has been removed by the player character PC. As an example, the example of FIG. 17 shows the inside of the terrain object TO in which the player character PC is digging by removing a portion of the terrain object TO, using a vertical cross-sectional view of the terrain object TO, indicating a situation that the player character PC is digging. Note that the vertical cross-sectional view of FIG. 17 is a diagram for describing a situation in which the player character PC is digging in the terrain object TO, but not a virtual space image used in the present invention or an image for displaying displayed based on the virtual space image.

When the player character PC performs an action of hitting a portion of the terrain object TO, a predetermined range of the terrain object TO around the hit portion is removed. For example, as shown in the upper figure of FIG. 17, when the player character PC performs an action of hitting a wall at the far end of a cave formed in the terrain object TO, a portion of the terrain object TO deeper than the wall is removed, so that excavation is proceeded in a depth direction in the cave. Specifically, as shown in the lower figure of FIG. 17, in the terrain object TO, a bell-shaped broken range is formed that is in the shape of a semi-ellipsoid at the deepest portion broken and removed by the breaking action performed by the player character PC. This action causes the space where the terrain object TO is absent to be extended at the deepest portion of the cave. FIG. 17 shows an example in which the cave formed in the terrain object TO is extended by a space CV due to the above action.

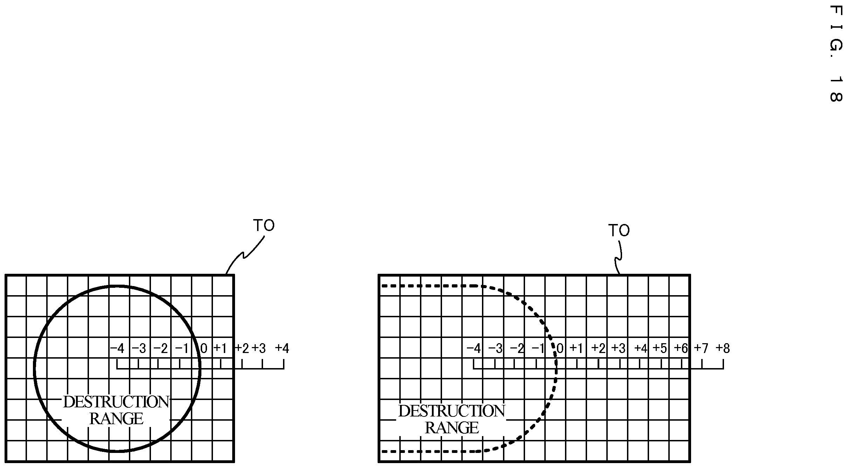

In the present invention, by changing the voxel data of voxels constituting the terrain object TO, the process of how the terrain object TO is broken and removed is represented. FIG. 18 is a diagram showing an example of a destruction range of voxels to be broken in a terrain object TO. Note that the left figure of FIG. 18 shows the front surface (surface to be broken) of the terrain object TO as viewed from the player character PC, which breaks the terrain object TO. The right figure of FIG. 18 shows the right side surface of the terrain object TO shown in the left figure.

The destruction range of the terrain object TO to be broken by the player character PC's breaking action is set based on the location where the player character PC breaks the terrain object TO, the player character PC's strength and capability, and the strength (material) of the terrain object TO. For example, the destruction range is set such that a distance from a reference location set based on a location where the player character PC has performed a breaking action in the game space is within a predetermined distance. In the example of FIG. 18, for the terrain object TO, a bell-shaped destruction range having a semi-spherical shape at a deepest portion lost due to the destruction is formed around the location where the player character PC has performed a breaking action. Note that the shape of the destruction range may be other shapes such as a sphere, ellipsoid, cube, cylinder, wedge, shapes generated by 3D software, and in addition, these shapes a portion of which has been removed, and the like. The destruction range may be located around a location where the player character PC has performed a breaking action (e.g., a location where the player character PC's punching fist has reached) in the game space, or around a location at a predetermined distance in front of said location as viewed from the player character PC.

A voxel to be removed (or partially removed) with reference to the above destruction range is determined using a signed distance field (SDF). The SDF of a voxel indicates a distance between the voxel and a surface of the destruction range closest to that voxel. It is assumed that the SDF of a voxel located on a surface of the destruction range is zero, the SDF of a voxel located outside the destruction range is positive, and the SDF of a voxel located inside the destruction range is negative. A removal process is set for each voxel, depending on the SDF of the voxel. For example, for a voxel to be removed, a portion of the terrain object TO that corresponds to the voxel is removed by rewriting the voxel data of the voxel such that the voxel data indicates the absence of a terrain object.

For example, in the present invention, removal of at least a portion of a voxel is controlled by changing a density included in the voxel data thereof. For example, the density is an index indicating the proportion of the volume of a voxel object to a region defined by a voxel. The density can take an integer value in the range from the lower limit value (e.g., 0) to the upper limit value (e.g., 255). It is assumed that the higher the value of the density set for a voxel, the greater the proportion in the voxel, and the lower the value of the density, the smaller the proportion in the voxel. It is also assumed that no voxel object is included in a voxel the value of the density of which is the lower limit (e.g., 0), and a voxel object is included throughout a voxel the value of the density of which is the upper limit value (e.g., 255). In other words, if the value of the density is greater than the lower limit value, the voxel data indicates the presence of a terrain object, and if the value of the density is the lower limit value, the voxel data indicates the absence of a terrain object. Note that the shape of a voxel mesh generated based on the density does not need to have a volume exactly corresponding to the value of the density.

In the present invention, removal of a voxel is controlled by rewriting the density of the voxel based on the SDF of the voxel. Specifically, by rewriting and reducing the densities of at least voxels having a negative SDF distance, at least a portion of the voxels included in the destruction range are changed to the state in which no terrain object is present. As a first example, by rewriting the densities of voxels having a negative SDF distance to the lower limit value, the voxels, which are included in the destruction range, are set to the state in which no terrain object is present, and by maintaining the values of the densities of voxels having a positive SDF distance unchanged, the voxels, which are out of the destruction range, are set to the state in which a terrain object is present. As a second example, by rewriting the densities of voxels having a negative SDF distance such that the value of the density of the voxel decreases with an increase in the absolute value of the distance, and rewriting the densities of voxels whose absolute value is greater than a predetermined value to the lower limit value, a portion of the voxels, which are included in the destruction range, are set to the state in which no terrain object is present, and by maintaining the values of the densities of voxels having a positive SDF distance unchanged, the voxels, which are out of the destruction range, are set to the state in which a terrain object is present. As a third example, by rewriting the densities of voxels having a negative SDF distance to the lower limit value, the voxels, which are included in the destruction range, are set to the state in which no terrain object is present, and by rewriting the densities of voxels having a positive SDF distance such that the value of the density of the voxel decreases with a decrease in the absolute value of the distance, a portion of the voxels, which are out of the destruction range, are set to the state in which the voxel is not entirely occupied by a voxel object.

Note that the density in the voxel data may be rewritten by adjusting the change amount of the density, depending on the type and state of a material indicated by material data included in the voxel data. For example, the change amount of the density may be adjusted (e.g., the change amount of the density to be rewritten is increased for a more breakable material), depending on a property (e.g., breakability or temperature) of a material indicated by the material data.

Alternatively, when the density in the voxel data is rewritten, the change amount of the density may be adjusted, depending on state data included in the voxel data. For example, the state data indicates the amount of damage applied to the terrain object TO by the player character PC. As an example, whether to reduce the density in the voxel data and whether to increase the amount of damage may be determined based on a relationship between the offensive strength of the player character PC and the defensive strength of the terrain object TO. Specifically, based on a relationship between the hardness of the offensive entity (e.g., the hardness of a fist of the player character PC punching the terrain object TO) and the hardness of the defensive (attacked) entity (the hardness of the material of the terrain object TO), the density in the destruction range is rewritten if the hardness of the offensive entity is greater, and neither the density in the destruction range nor the amount of damage is rewritten if the hardness of the defensive (attacked) entity is greater. If the hardness of the offensive entity is substantially equal to the hardness of the defensive (attacked) entity, the amount of damage to voxels in the destruction range is increased, and if the amount of the damage exceeds the acceptable amount of the voxel (the damage endurance value of the material), the densities of the voxels are rewritten. Note that the amount of damage to a voxel exceeds the acceptable amount of the voxel, the density of the voxel may be set to zero, e.g., the voxel may be removed. Thus, the amount of damage to a voxel can serve as voxel data indicating the absence of a terrain.

After the density is rewritten as described above, a mesh is newly formed on a surface (specifically, a surface that is newly exposed to the outside by breaking) of the terrain object TO to update the display. For example, when an event occurs in which the terrain object TO is broken, a mesh is newly formed by recalculating mesh vertices in a range including voxels whose voxel data has been rewritten due to the destruction. As an example, as shown in FIG. 14, mesh vertices are generated. Thus, after voxels are removed, a new mesh may be generated between a voxel in which a terrain is absent and a voxel in which a terrain is present, by an algorithm that recalculates mesh vertices based on the densities of voxels, so that the terrain object TO may be removed. Thereafter, texture for use in rendering each face of the mesh is determined based on the voxel data, and the determined texture is mapped to each face, whereby an image of the broken terrain object TO is generated. Note that the range in which mesh recalculation is performed may be a chunk including voxels whose voxel data has been rewritten (a process unit including a predetermined number of voxels). For example, if a chunk includes 16 × 16 × 16 voxels, and recalculation is performed on chunks including voxels whose voxel data has been rewritten, processing can be reduced compared to when a mesh is recalculated throughout the game space. The range may be a voxel space in which voxels whose voxel data has been rewritten are located, or the entire terrain object TO, which includes voxels whose voxel data has been rewritten. If the processing load is not so great, a mesh may be recalculated throughout the game space.

In the example of FIG. 16, the player character PC is located outside the cave B formed in the terrain object TO. The virtual camera C is also located outside the terrain object TO, based on the location of the player character PC. No other objects (e.g., the terrain object TO) are present between the virtual camera C and the player character PC.

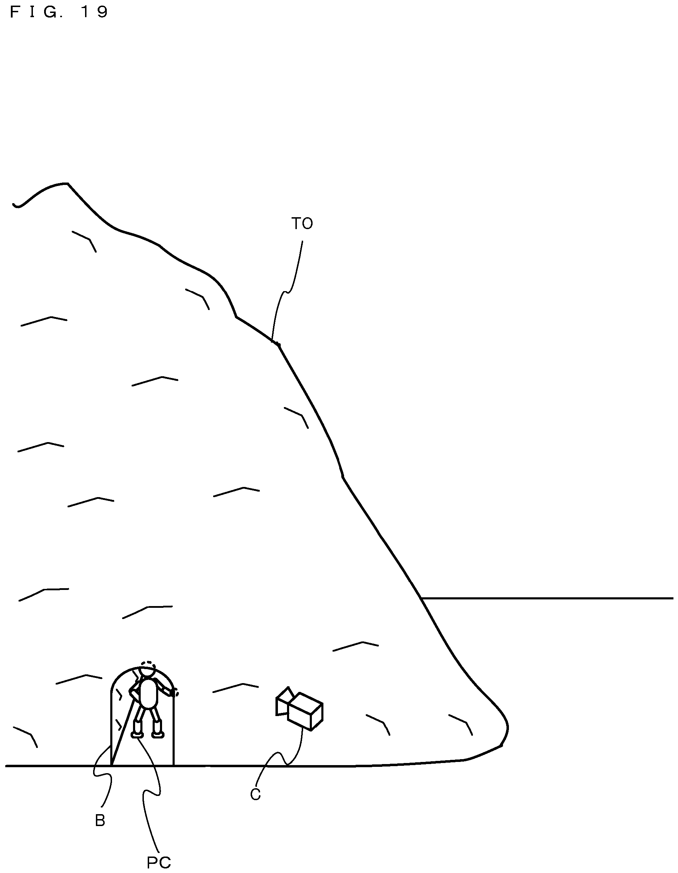

FIG. 19 is a diagram showing an example in which the virtual camera C is provided in a second state in the game space in which the terrain object TO and the player character PC are set. In the example of FIG. 19, the player character PC has been moved into the cave B formed in the terrain object TO, and is located therein. The virtual camera C has also been moved in the game space, based on the location of the player character PC, and is located outside the terrain object TO in the example of FIG. 19. Therefore, the terrain object TO is present between the virtual camera C and the player character PC, and the player character PC is masked by a portion of the surface of the terrain object TO that faces front when viewed from the virtual camera C, e.g., is opposite the virtual camera C. Specifically, in the example of FIG. 19, the player character PC is masked by a surface facing the virtual camera C of the mesh forming the terrain object TO.

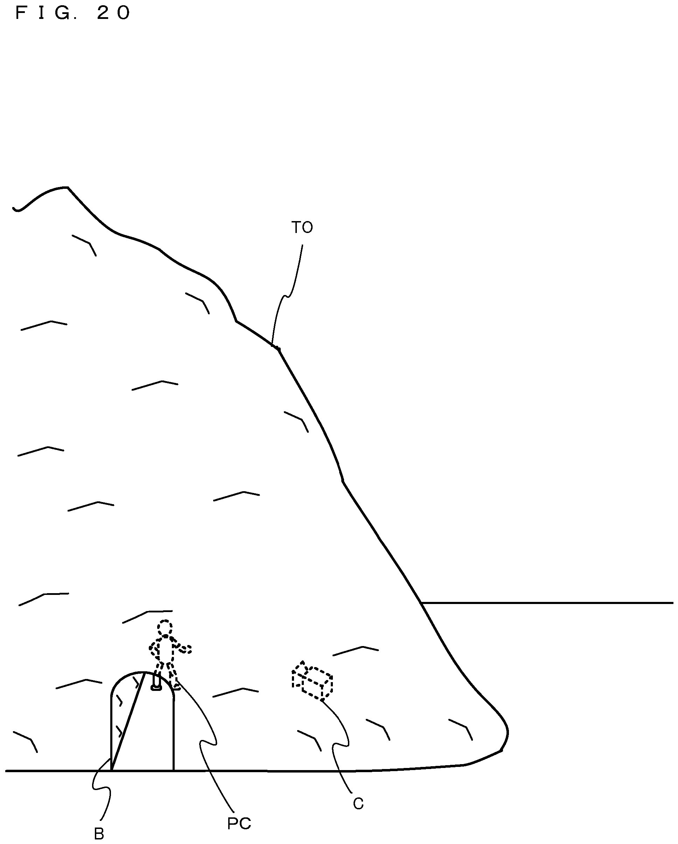

FIG. 20 is a diagram showing an example in which the virtual camera C is provided in a third state in the game space in which the terrain object TO and the player character PC are set. In the example of FIG. 20, the player character PC has been moved deeper in the cave B formed in the terrain object TO and is present at that location. The virtual camera C has also been moved in the game space, based on the location of the player character PC. In the example of FIG. 20, the virtual camera C is located inside the terrain object TO. Therefore, the surface that faces front is not present between the virtual camera C and the player character PC. Note that in FIG. 20, the player character PC and the virtual camera C are represented by a dashed line, which indicates that the player character PC and the virtual camera C are located inside the terrain object TO.

In the present invention, when a positional relationship between the player character PC and the terrain object TO around the player character PC in the game space does not satisfy an underground camera permission condition, then if the virtual camera C approaches the terrain object TO, avoidance control is executed to avoid a situation that the virtual camera C is located inside the terrain object TO. Meanwhile, when the positional relationship satisfies the underground camera permission condition, the virtual camera C is controlled without execution of the avoidance control. In other words, when the positional relationship satisfies the underground camera permission condition, the virtual camera C is allowed to be located inside the terrain object TO. Note that the terrain object TO that is subjected to determination of the underground camera permission condition, and the terrain object TO that is subjected to the avoidance control or in which the virtual camera C is allowed to be located, may be the same or different.

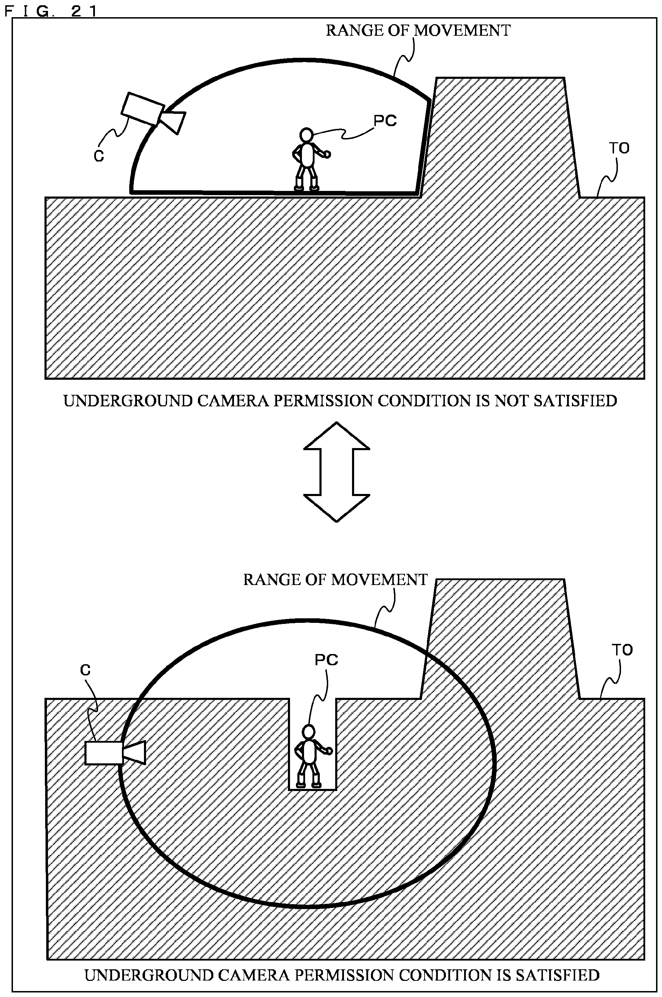

FIG. 21 is a diagram for describing an example of the range of movement of the virtual camera C in the case in which the underground camera permission condition is not satisfied, and an example of the range of movement of the virtual camera C in the case in which the underground camera permission condition is satisfied. As shown in the upper and lower figures of FIG. 21, the range of movement of the virtual camera C is a range in the game space that is defined with reference to the location of the player character PC (e.g., a location inside the player character PC such as the center-of-gravity location, or a location around the player character PC). For example, the range of movement may be formed using a three-dimensional surface such as a prolate spheroid (prolate ellipsoid), oblate spheroid (oblate ellipsoid), or sphere whose center is at the location of the player character PC. As an example, the range of movement is a prolate spheroid, oblate spheroid, or sphere formed with the upward/downward direction of the game space passing through the location of the player character PC as the direction of rotation thereof, or a prolate spheroid or oblate spheroid formed with the forward/backward direction of the game space passing through the location of the player character PC as the direction of rotation thereof. The virtual camera C can be moved in the game space in the range of movement according to the user's operation.

As shown in the upper figure of FIG. 21, the range of movement is formed outside the terrain object TO in the case in which the underground camera permission condition is not satisfied. In the case in which the three-dimensional surface forming the range of movement overlaps with the terrain object TO, the three-dimensional surface excluding the overlapping portion serves as the range of movement of the virtual camera C.

As shown in the lower figure of FIG. 21, in the case in which the underground camera permission condition is satisfied, even if the three-dimensional surface of the range of movement overlaps with the terrain object TO, the range of movement does not exclude any overlapping portion inside the terrain object TO. As described above, the virtual camera C can be moved in the game space along the range of movement, and therefore, by moving the virtual camera C into the range of movement formed inside the terrain object TO, the virtual camera C can serve as an underground camera provided inside the terrain object TO.

Note that the three-dimensional surface of the range of movement in the case in which the underground camera permission condition is not satisfied may have a size, orientation, shape, and the like different from those of the three-dimensional surface of the range of movement in the case in which the underground camera permission condition is satisfied. The virtual camera C may also be moved not only on the surface of a three-dimensional object forming the range of movement but also inside that three-dimensional object. The three-dimensional surface of the range of movement may have other three-dimensional shapes. For example, the three-dimensional surface of the range of movement may be the surface of a polyhedron, cylinder, elliptic cylinder, regular polygonal prism, circular cone, regular polygonal pyramid, or the like, the surface of such a three-dimensional shape a portion of which is cut away, the surface of such a three-dimensional shape that is deformed, or the like.

The range of movement of the virtual camera C is provided in order to describe the concept of the possible movement of the virtual camera C. In the actual control, the abovementioned three-dimensional region may not be previously calculated or set. For example, the location and orientation of the virtual camera C may be calculated, as appropriate, depending on the location of the player character PC. In that case, a distance (place distance) of the virtual camera C from the player character PC is calculated, as appropriate, depending on a direction (place direction) in which the virtual camera C is located with respect to the player character PC, and the location and orientation of the virtual camera C are set, depending on the place direction and the place distance. When the location of the virtual camera C is included inside the terrain object TO without the underground camera permission condition being satisfied, that location is changed to the outside of the terrain object TO. As an example, the location of the virtual camera C is changed to a location outside the terrain object and closest to the terrain object in the place direction of the virtual camera C.

In the present invention, the underground camera permission condition is set using the proportion of a surrounding around a location based on the player character PC which is masked by another object including the terrain object TO. For example, the underground camera permission condition may be set based on the masking ratio of the range of view from a location based on the player character PC in the upward/downward, left/right, and forward/backward directions, which is masked by another object. As an example, if the masking ratio is at least 50%, it may be determined that the underground camera permission condition is satisfied.

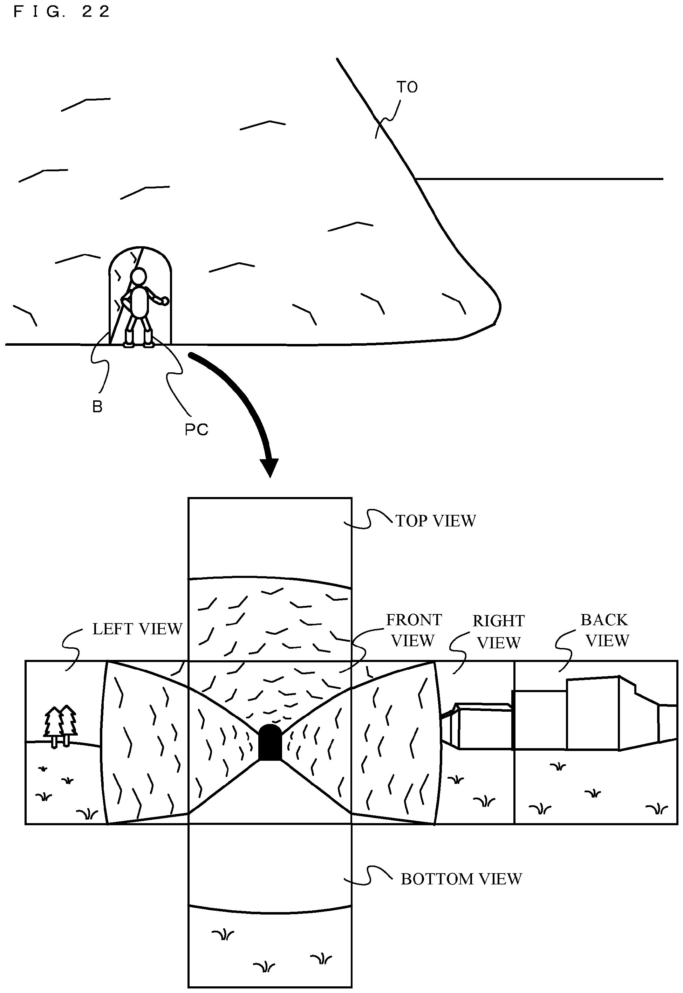

FIG. 22 is a diagram showing an example of six views from a location based on the player character PC in the upward/downward, left/right, and forward/backward directions. For example, the location based on the player character PC from which the six views are obtained is set to a location that is a predetermined distance (e.g., about 8 m) above the player character PC in the game space. In the example of FIG. 22, the player character PC is located in the vicinity of the entrance of the cave B, and therefore, the imaged top view is divided into two, e.g., the terrain object TO and the sky in the game space, and therefore, at least 50% of the imaged top view is masked by another object.

For example, in the present invention, the six views are obtained at regular time intervals, the proportion of pixels excluding pixels having no depth value (z-value) to all pixels is calculated as the masking ratio. If the calculated masking ratio is at least a threshold, it is determined that a positional relationship between the player character PC and the terrain object TO around the player character PC satisfies the underground camera permission condition. If the masking ratio is high, it is considered that the player character PC is located inside another object (e.g., the terrain object TO), and it is desirable to observe that object around the player character PC, and therefore, by using such a masking ratio, it can be appropriately determined whether or not visibility is improved by allowing the virtual camera C to be located inside that object in such a situation.

Note that the masking ratio is a parameter indicating how much the surrounding around the player character PC is masked by the terrain object TO or the like, irrespective of a distance between the player character PC and the masking object. Alternatively, the masking ratio may be calculated based on a distance between the player character PC and the masking object whose image is to be captured. For example, the masking ratio may be calculated, assuming that pixels for which the distance between the player character PC and another object whose image is to be captured is at least a predetermined distance (e.g., pixels whose depth value (z-value) is at least a predetermined value) are those that are not masked. In that case, the proportion of pixels excluding pixels for which the distance between the player character PC and another object is at least a predetermined value and pixels having no depth value (z-value) to all pixels is calculated as the masking ratio. It is considered that when the player character PC is masked by another object at a location far away from the player character PC (e.g., the player character PC is located in a wide space), that state is similar to the state in which the player character PC is located on the earth. In such a situation, if the virtual camera C is allowed to be located inside that other object, visibility may be reduced. Such a situation can be avoided by using such a masking ratio.

The masking ratio may be calculated for a portion of the six views with higher priority. As a first example, the masking ratio may be calculated for the views in the horizontal direction of the game space (the front view, back view, left view, and right view) with higher priority than that of the views in the vertical direction (the top view and bottom view). As an example, the masking ratio may be calculated for the four views in the horizontal direction of the game space, but not for the two views in the vertical direction of the game space. As another example, the masking ratio may be calculated, giving a lower contribution ratio (weight) to the two views in the vertical direction of the game space than that of the other four views. When the player character PC is located in a space that has a ceiling and is not very much occluded in the horizontal direction, then if the virtual camera C is allowed to be located above the ceiling or under the earth, visibility may be reduced. Such a situation can be avoided using such a masking ratio. As a second example, the masking ratio may be calculated for the four views in the horizontal direction of the game space and the top view of the game space as a view for calculation, excluding the view in the downward direction. In most cases, the player character PC is masked in the downward direction of the game space, which is the ground direction. Therefore, the calculation process can be reduced by excluding the bottom view from calculation of the masking ratio. Note that the embodiment in which the masking ratio is calculated, giving higher priority to a portion of the six views, may be carried out in combination with the embodiment in which the masking ratio is calculated based on the distance to an object whose image to be captured.

Concerning another object by which the player character PC is masked, the masking ratio may be calculated only for the terrain object TO. The locations from which the images of the six views are obtained may be moved according to the environment in which the player character PC is located. For example, when the player character PC is placed at a location above and in the vicinity of which another object is present, the locations from which the six views are obtained may be moved to a location closer to the player character PC than is that location or a location inside the player character PC (e.g., a location below the location that is a predetermined distance above the player character PC) so as not to coincide with that other object.

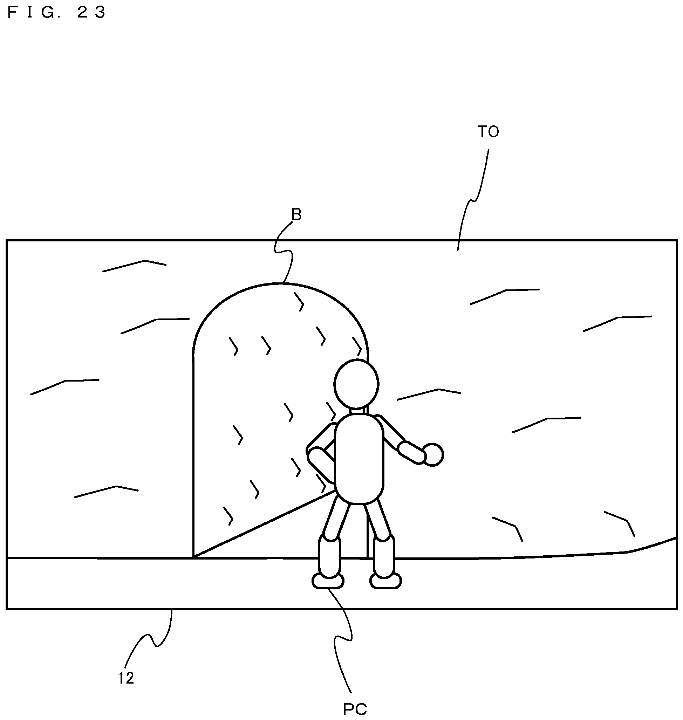

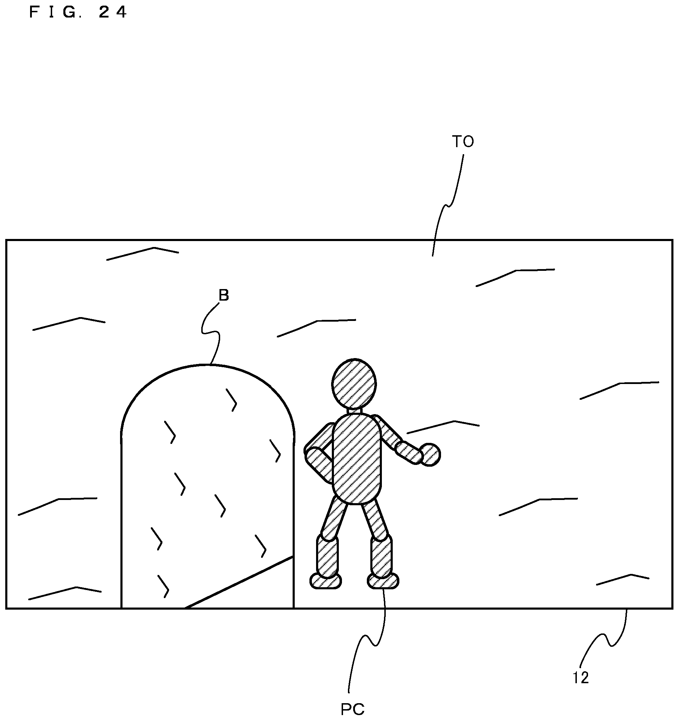

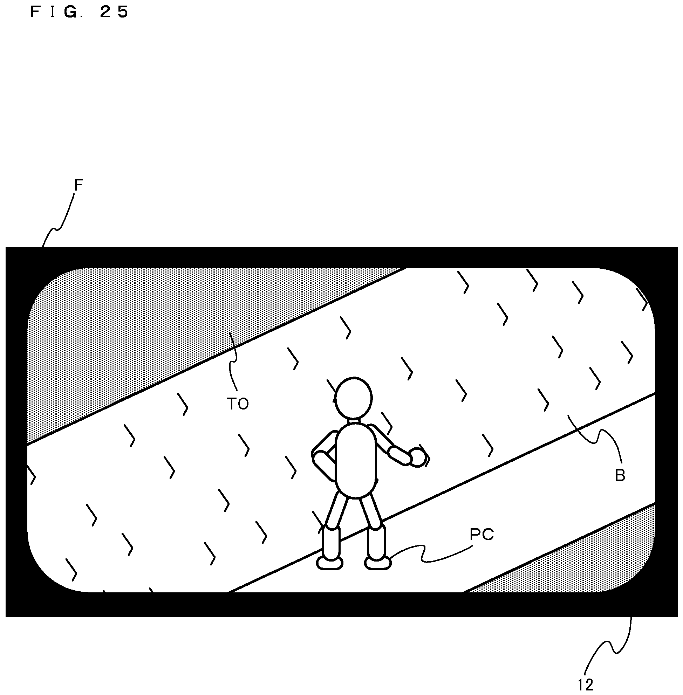

Next, an image for displaying that is displayed on the display 12 based on an image of the game space (virtual space image) as viewed from each virtual camera C will be described. FIG. 23 is a diagram showing an example of an image for displaying that is displayed on the display 12 based on an image of the game space as viewed from a virtual camera C provided in a first state. FIG. 24 is a diagram showing an example of an image for displaying that is displayed on the display 12 based on an image of the game space as viewed from a virtual camera C provided in a second state. FIG. 25 is a diagram showing an example of an image for displaying that is displayed on the display 12 based on an image of the game space as viewed from a virtual camera C provided in a third state.

In FIG. 23, the player character PC is located outside the cave B formed in the terrain object TO in the vicinity of the entrance of the cave B. A virtual camera C for generating a virtual space image is provided outside the terrain object TO in the first state described with reference to FIG. 16, based on the location of the player character PC. Therefore, in the first state, the terrain object TO is not present between the virtual camera C and the player character PC, and a portion of the surface forming the terrain object TO that faces front when viewed from the virtual camera C is viewed on the further side of the player character PC when viewed from the virtual camera C. Here, in the present invention, in generation of an image of the game space (virtual space image), back-face culling in which a surface facing back with respect to the virtual camera C (e.g., a portion of the mesh forming the terrain object TO that faces back when viewed from the virtual camera C) is not rendered or hidden-surface removal in which a surface that is not viewed from the virtual camera C is removed is executed. Therefore, as shown in FIG. 23, an image of the game space as viewed from the virtual camera C in the first state is an image obtained by capturing an image of the entire player character PC, and capturing an image of the surface of the terrain object TO that faces front on the further side of the player character PC when viewed from the virtual camera C, and an image for displaying based on the image is displayed on the display 12.

In FIG. 24, the player character PC has been moved inward from the entrance of the cave B formed in the terrain object TO. A virtual camera C for generating a virtual space image is provided outside the terrain object TO in the second state described with reference to FIG. 19, based on the location of the player character PC. Therefore, in the second state, the terrain object TO is present between the virtual camera C and the player character PC, a portion of the surface of the terrain object TO that faces front is seen from the side of the player character PC on which the virtual camera C is located. The player character PC is masked by a portion of the surface of the terrain object TO that faces front when viewed from the virtual camera C, so that the player character PC is not directly viewed from the virtual camera C. In the present invention, a silhouette image (hatching region in FIG. 24) in which a silhouette of the player character PC is seen through the surface of the terrain object TO is displayed in order to allow the user to check the location of the player character PC even in such a state. Therefore, as shown in FIG. 24, in an image of the game space in the second state as viewed from the virtual camera C, an image of the surface of the terrain object TO that faces front on the side nearer the player character PC when viewed from the virtual camera C is captured, and that image includes a silhouette image of the entire player character PC, which can be seen through that surface. An image for displaying based on that image is displayed on the display 12. Note that the silhouette image may be an image in which the player character PC is directly seen through the surface of the terrain object TO. When a terrain object TO having a thickness less than a predetermined thickness is present between the player character PC and the virtual camera C, the virtual space that is seen through the terrain object TO may be displayed.

Here, if the positional relationship between the player character PC and the terrain object TO (another object) satisfies the underground camera permission condition, the virtual camera C may be automatically moved so as to be located inside the terrain object TO. For example, in the second state described with reference to FIG. 19, if the positional relationship between the player character PC and the terrain object TO satisfies the underground camera permission condition, the virtual camera C that is located outside the terrain object TO may be forced to be located inside the terrain object TO so as to approach the player character PC. In that case, the virtual camera C may be automatically moved by reducing the range of movement of the virtual camera C set in the second state, or by temporarily moving the virtual camera C into the range of movement of the virtual camera C set in the second state.

The above process of automatically moving the virtual camera C into the terrain object TO may be executed if the underground camera permission condition and a predetermined condition are satisfied. As a first example of that predetermined condition, if, when the underground camera permission condition is satisfied, a terrain object TO having at least a predetermined thickness is present between the player character PC and the virtual camera C, the virtual camera C may be automatically moved into the terrain object TO. As a second example of the predetermined condition, if, when the underground camera permission condition is satisfied, the virtual camera C continues to be located outside the terrain object TO for at least predetermined period of time, the virtual camera C may be automatically moved into the terrain object TO. As a third example of the predetermined condition, if, when the underground camera permission condition is satisfied, the virtual camera C is located outside the terrain object TO and the player character PC is moved across at least a predetermined distance, the virtual camera C may be automatically moved into the terrain object TO.

In FIG. 25, the player character PC has been moved deeper in the cave B formed in the terrain object TO and is located there. The virtual camera C for generating a virtual space image is located inside the terrain object TO in the third state described with reference to FIG. 20, based on the location of the player character PC. In the third state, the terrain object TO is present between the virtual camera C and the player character PC, and the portion of the surface forming the terrain object TO that faces front (e.g., a portion of the surface of the terrain object TO or a portion of the mesh forming the surface of the cave B that faces the virtual camera C) is not present. Here, in the process of the present invention, even when the inside of the terrain object TO is present between the virtual camera C and the player character PC, the terrain object TO that is present is not to be displayed for the virtual camera C, because only the mesh of the surface of the terrain object TO is to be displayed. Although a portion of the mesh forming the cave B that is closer to the virtual camera C is present between the virtual camera C and the player character PC, most of that portion of the mesh faces back with respect to the virtual camera C and are not to be displayed, and therefore, an image of the player character PC is captured such that the player character PC, which has been moved deeper in the cave B, is viewed from the virtual camera C. Therefore, as shown in FIG. 25, in the third state, an image of the game space as viewed from the virtual camera C includes a captured image of the entire player character PC and a captured image of a portion of the surface of the cave B that faces front on the further side of the player character PC when viewed from the virtual camera C, and an image for displaying based on that image is displayed on the display 12.

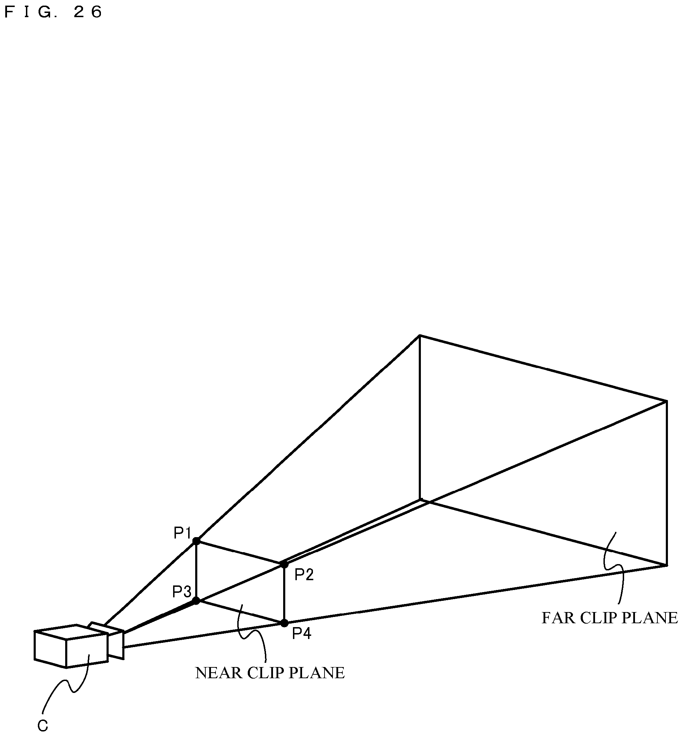

In the present invention, when the virtual camera C is located inside the terrain object TO, a display changing process of changing an image for displaying to be displayed on the display 12 is executed. As described above, if the positional relationship between the player character PC and the terrain object TO satisfies the permission condition, the virtual camera C is allowed to be located inside the terrain object TO without the avoidance control to prevent the virtual camera C from being located inside the terrain object TO. If it is determined that the virtual camera C has been moved in the game space, so that the virtual camera C is located inside the terrain object TO, the display changing process is executed. Although the determination may be executed by determining whether or not the location of the virtual camera C itself is inside the terrain object TO, the virtual camera C is determined to be located inside the terrain object TO when all points P1 to P4 at the four corners of a near clip plane of the virtual camera C are located inside the terrain object TO, as shown in FIG. 26, for example. As another example, when at least two of the four corner points P1 to P4 of a near clip plane of the virtual camera C are located inside the terrain object TO, the virtual camera C may be determined to be located inside the terrain object TO.

For example, when a post-process is executed on an image of the game space (virtual space image) as viewed from the virtual camera C as the display changing process, an image for displaying to be displayed on the display 12 is generated. For example, a post-process of applying an effect (filter) to a frame buffer for rendering an image of the virtual space as viewed from the virtual camera C is executed.

As a first example of the display changing process, a post-process of reducing the visibility of an edge portion of the image for displaying is executed. For example, in an example of the image for displaying of FIG. 25, light is reduced at a peripheral portion located outward of a rounded-quadrangular region formed at the center of the image for displaying, e.g., the peripheral portion is made darker, so that a light reduced region F is formed. Note that the region formed at the center of the image for displaying may not be rounded-quadrangular, and may have other shapes such as elliptic, circular, beveled-quadrangular, rhombic, oval, and polygonal shapes.

As a second example of the display changing process, a post-process of fogging or blurring is executed to reduce the visibility of an object to a greater extent as the object is located further away from the virtual camera C. For example, a hatching region indicating the terrain object TO in FIG. 25 is a region whose display form is changed by applying stronger fogging thereto as the terrain object TO is located further away from the virtual camera C.

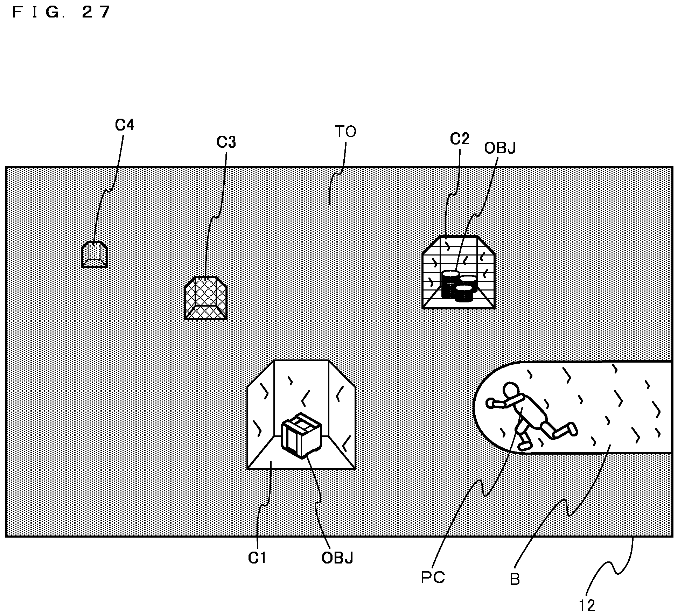

FIG. 27 is a diagram showing an example of an image for displaying to which a fogging effect is applied based on the distance from the virtual camera C. In FIG. 27, the virtual camera C located inside the terrain object TO generates an image of the game space that is captured when the player character PC located in the cave B is viewed in a lateral direction. Note that in the example of the image for displaying shown in FIG. 27, the light reduced region F is not shown, for the sake of ease of understanding of the image.

In the terrain object TO, a plurality of cavities C1 to C4 are formed in addition to the cave B. Specifically, the cavity C1, the cavity C2, the cavity C3, and the cavity C4 are formed in the terrain object TO in ascending order of distance from the virtual camera C (e.g., the cavity C1 is the closest). The player character PC is located in the cave B, and a virtual object OBJ is provided in each of the cavities C1 and C2. As described above, in the process of the present invention, a portion of the mesh of the terrain object TO that has a surface which can be viewed from the virtual camera C is to be displayed, and therefore, a rendering process is executed on a portion of the mesh forming a cave or cavity in the terrain object TO that has a surface which can be viewed from the virtual camera C. In other words, an image for displaying that shows cavities located around the cave B in addition to the inside of the cave B as shown in FIG. 27 is generated by the above rendering process without execution of a particular process of detecting a cave or cavity in the range of view of the virtual camera C or forming a cross-section that allows the virtual camera C to directly view a cave or cavity. Note that, in the terrain object TO, other cavities, objects, and the like may be present far away from the virtual camera C in addition to the cave B, the cavities C1 to C4, the player character PC, and the virtual objects OBJ, but cannot be seen in the image for displaying due to a fogging effect described below. Note that in the case in which a virtual object OBJ has a function of being targeted by the player character PC's action, the virtual object OBJ may be provided in the terrain object TO in the virtual space in a noticeable color, lightness, or luminance.

The cavity C1 is in the shape of a rectangular cuboid formed by six inner walls (surfaces), and is formed in the terrain object TO and located closest to the virtual camera C. A virtual object OBJ is provided inside the cavity C1. In the image for displaying, four of the six inner walls (surfaces) of the cavity C1 whose front mesh surfaces face the virtual camera C are displayed. The cavity C1 is located closest to the virtual camera C and as close as the cave B in which the player character PC is located, and therefore, has not been subjected to fogging, so that an image of the four surfaces of the cavity C1 facing the virtual camera C and the virtual object OBJ is directly displayed in the image for displaying.

The cavity C2, which is in the shape of a rectangular cuboid formed by six inner walls (surfaces), is formed in the terrain object TO and located further than the cavity C1 is when viewed from the virtual camera C. A virtual object OBJ is provided inside the cavity C2. In the image for displaying, four of the six inner walls (surfaces) of the cavity C2 whose front mesh surfaces face the virtual camera C are displayed. The cavity C2 has been subjected to weak fogging, based on the distance from the virtual camera C. For example, in fogging of the present invention, a fogging effect is applied to an image of the four surfaces of the cavity C2 and the virtual object OBJ by adding a color to the image according to the distance (e.g., the depth value (z-value)) (e.g., as the distance increases, the RGB value is increased such that a brown color is obtained). In fogging of the present invention, the color of edges (e.g., an outer periphery of the cavity C2 when displayed) may be changed to a predetermined color (e.g., orange) and thereby highlighted. As a result, a display changing process of applying a weak fogging effect to the image of the four surfaces of the cavity C2 that face the virtual camera C and the virtual object OBJ, and highlighting the edges of the four surfaces, is executed, and an image for displaying that has been subjected to the display changing process is displayed.

The cavity C3, which is in the shape of a rectangular cuboid formed by six inner walls (surfaces), is formed in the terrain object TO and located further than the cavities C1 and C2 are when viewed from the virtual camera C. In the image for displaying, four of the six inner walls (surfaces) of the cavity C3 whose front mesh surfaces face the virtual camera C are displayed. The cavity C3 has been subjected to stronger fogging than that of the cavity C2, based on the distance from the virtual camera C. Note that a virtual object OBJ may be provided inside the cavity C3, but cannot be seen on the display device, due to the strong fogging effect. A display changing process of applying a strong fogging effect to an image of the four surfaces of the cavity C3 whose front mesh surfaces face the virtual camera C by executing the fogging process on the cavity C3 so as to apply a stronger fogging effect than that of the cavity C2 to the cavity C3, and highlighting the peripheral edges of the cavity C3, is executed, and an image for displaying subjected to the display changing process is displayed.

The cavity C4, which is in the shape of a rectangular cuboid formed by six inner walls (surfaces), is formed in the terrain object TO and located further than the cavities C1, C2, and C3 are when viewed from the virtual camera C. In the image for displaying, four of the six inner walls (surfaces) of the cavity C4 whose front mesh surfaces face the virtual camera C are displayed. The cavity C4 has been subjected to much stronger fogging than that of the cavities C2 and C3, based on the distance from the virtual camera C. Note that a virtual object OBJ may be provided inside the cavity C4, but cannot be seen on the display device, due to the much stronger fogging effect. A display changing process of applying a much stronger fogging effect to an image of the four surfaces of the cavity C4 whose front mesh surfaces face the virtual camera C by executing the fogging process on the cavity C4 so as to apply a stronger fogging effect than that of the cavity C3 to the cavity C4, and highlighting the peripheral edges of the cavity C4, is executed, and therefore, an image for displaying in which only the edges can be seen is displayed in the example of FIG. 27.

Thus, by applying a fogging effect to an object according to the distance from the virtual camera C, the user is enabled to recognize the distance to the object. In the fogging process, the edges are highlighted, and therefore, even if the surface of an object itself cannot be seen, the object can be displayed with only the contour thereof being able to be seen, whereby the presence of a cavity can be easily recognized. Even when a cavity is located far away so that a virtual object cannot be seen, then if only the presence of a cavity is visually recognizable, the object can be presented as a target of the player character PC's action.

Note that in the second example of the display changing process, a process of further adding a predetermined pattern may be executed in addition to the fogging process. For example, when the display changing process is executed, a checker pattern, geometric pattern, or the like may be added in a color that is the same as or different from that which is added in the fogging process.

As a third example of the display changing process, a post-process of changing the display form of at least a portion of non-front portions that are portions of the surface forming the terrain object TO that face front when viewed from the virtual camera C and have not been rendered (e.g., a background portion of the game space) is executed.

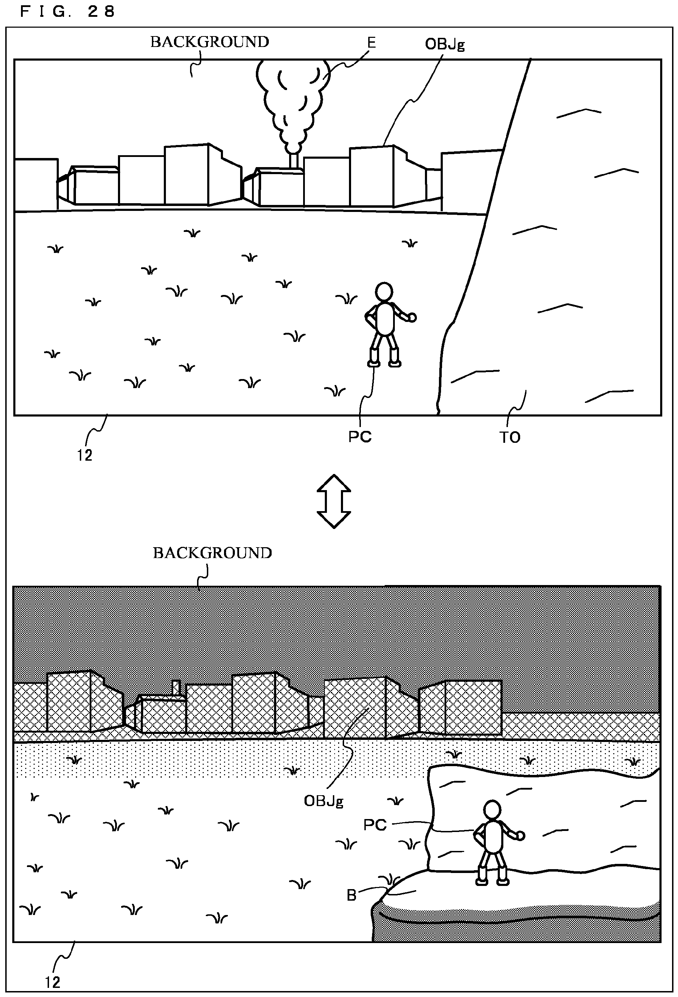

FIG. 28 is a diagram showing an example of an image for displaying in which the display form of a background portion of the game space is changed. In the upper figure of FIG. 28, the player character PC and the virtual camera C are located outside the terrain object TO. An image for displaying is displayed in which, in the game space outside the terrain object TO, a field that is outside the terrain object TO, a ground object OBJg, and a smoke effect E are displayed far away from the virtual camera C, and a background image (e.g., blue sky) is rendered behind the ground object OBJg and the effect E.

In the lower figure of FIG. 28, the player character PC and the virtual camera C have been moved from the locations in the game space shown in the upper figure of FIG. 28, and are located inside the terrain object TO. A portion of the surface of the cave B is displayed as a portion of the meshes forming the surface of the terrain object TO and the surface of the cave B whose front surface faces the virtual camera C. A portion of the surfaces forming the field, which is present outside the terrain object TO, and the ground object OBJg that faces front (e.g., a portion of the surface of the field and the surface of the ground object OBJg that faces the virtual camera C) are displayed. A background image is displayed at a portion corresponding to a non-front portion of the surfaces forming the field, which is present outside the terrain object TO, the ground object OBJg, and the terrain object TO, that is not rendered as a surface that faces front. Note that in the example of the image for displaying shown in the lower figure of FIG. 28, the light reduced region F is not shown, for the sake of ease of understanding of the image.

When the virtual camera C is located inside the terrain object TO, the fogging process described in the second example of the display changing process is executed to apply a fogging effect depending on the distance from the virtual camera C to the images of the terrain object TO, the field, which is present outside the terrain object TO, the ground object OBJg, and the like.

Meanwhile, the distance of the background image, which is the non-front portion, from the virtual camera C is infinite (e.g., no depth value), and is subjected to a display changing process of changing into a predetermined display form. In the present invention, as a third example of the display changing process, an image having no depth value such as a background image is filled with a color of dark gray to black, and a resultant image for displaying is displayed. For the effect E shown in the upper diagram of FIG. 28, an image having no depth value is displayed. In the present invention, such an image having the effect E is also subjected to the process of filling with a color of dark gray to black as with the background image. Therefore, in the lower figure of FIG. 28, an image for displaying that has been changed so as not to show the effect E is displayed.

Thus, in the third example of the display changing process, the display form of at least a portion of the non-front portions (e.g., a background portion and a portion showing the effect E of the game space) is changed, which can indicate that the virtual camera C is located inside the terrain object TO, in an easy-to-understand manner. Note that the non-front portions may be filled with any other color that is darker than that (e.g., the color of light sky) of the background image which is displayed when the virtual camera C is located outside the terrain object TO. By filling the non-front portions with such a dark color, it is possible to prevent displaying of an image that shows light sky as the background image even when the virtual camera C is located inside the terrain object TO, and therefore, seems unnatural to the user.

Note that in the third example of the display changing process, an image having no depth value such as the effect E is filled with a color of dark gray to black by the display changing process, and is not displayed in the image for displaying. Therefore, an image such as the effect E is rendered before the filling process, so that the image is not displayed only in the region in which the filling is executed, and is displayed in the region in which the filling is not executed. Meanwhile, when it is necessary to display, in the image for displaying, an image at least a portion of which is disabled to be displayed by the display changing process, the portion that is temporarily disabled to be displayed by the display changing process may be re-rendered after the display changing process so that the image is re-displayed in the image for displaying.

Although in the foregoing, the display changing process is, for example, executed by executing a post-process on an image of the virtual space as viewed from the virtual camera C, the display changing process may be executed by changing the virtual space as viewed from the virtual camera C. For example, in a first example of the display changing process, an object for changing corresponding to the light reduced region F may be placed at an edge of the range of view of the virtual camera C so that the visibility of an edge portion of an image for displaying is reduced. In a second example of the display changing process, by placing an object for changing such as smoke, fog, or smog in the virtual space located at least a predetermined distance away from the virtual camera C, the visibility of an object may be reduced according to the distance from the virtual camera C. The visibility of an object may also be reduced according to the distance from the virtual camera C by changing the color, lightness, or luminance of each object, the size, shape, or presence or absence of each object, or the distance from the virtual camera C of the location of the changing, based on the distance from the virtual camera C (e.g., the distance from the virtual camera C of the location of the changing is reduced compared to when the display changing process is not executed). In a third example of the display changing process, the display form of at least a portion of the non-front portions may be changed by changing the color, lightness, or luminance of the background image or the effect E in the virtual space, or removing the effect E from the virtual space.

When the display changing process is triggered by the movement of the virtual camera C from the outside to the inside of the terrain object TO, a fade-in process for an underground camera scene may be executed so that the scene is gradually transitioned from a state in which the display changing process has not been executed to a state in which the display changing process has been executed. When the end of the display changing process is triggered by the movement of the virtual camera C from the inside to the outside of the terrain object TO, a fade-out process for an underground camera scene may be executed so that the scene is gradually transitioned from a state in which the display changing process has been executed to a state in which the display changing process has not been executed.

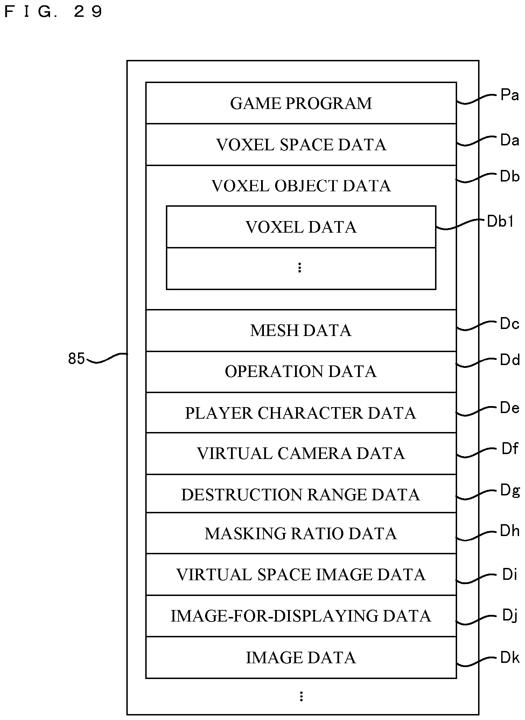

Next, a specific example of a game process that is an example of an information process in the game system 1 will be described with reference to FIGS. 29 to 31.

FIG. 29 is a diagram showing an example of various kinds of data for use in the information process in the game system 1. As shown in FIG. 29, the game system 1 stores a game program Pa, voxel space data Da, voxel object data Db, mesh data Dc, operation data Dd, player character data De, virtual camera data Df, destruction range data Dg, masking ratio data Dh, virtual space image data Di, image-for-displaying data Dj, image data Dk, and the like. The game program Pa, the voxel space data Da, and the image data Dk are previously stored in the game system 1 before execution of the game process. The game program Pa and the voxel space data Da are, for example, stored in a storage medium attached to the slot 23 of the main body apparatus 2. The voxel object data Db, the mesh data Dc, the operation data Dd, the player character data De, the virtual camera data Df, the destruction range data Dg, the masking ratio data Dh, the virtual space image data Di, and the image-for-displaying data Dj are generated during execution of the game process. The voxel object data Db, the mesh data Dc, the operation data Dd, the player character data De, the virtual camera data Df, the destruction range data Dg, the masking ratio data Dh, the virtual space image data Di, and the image-for-displaying data Dj are, for example, stored in the DRAM 85 of the main body apparatus 2.

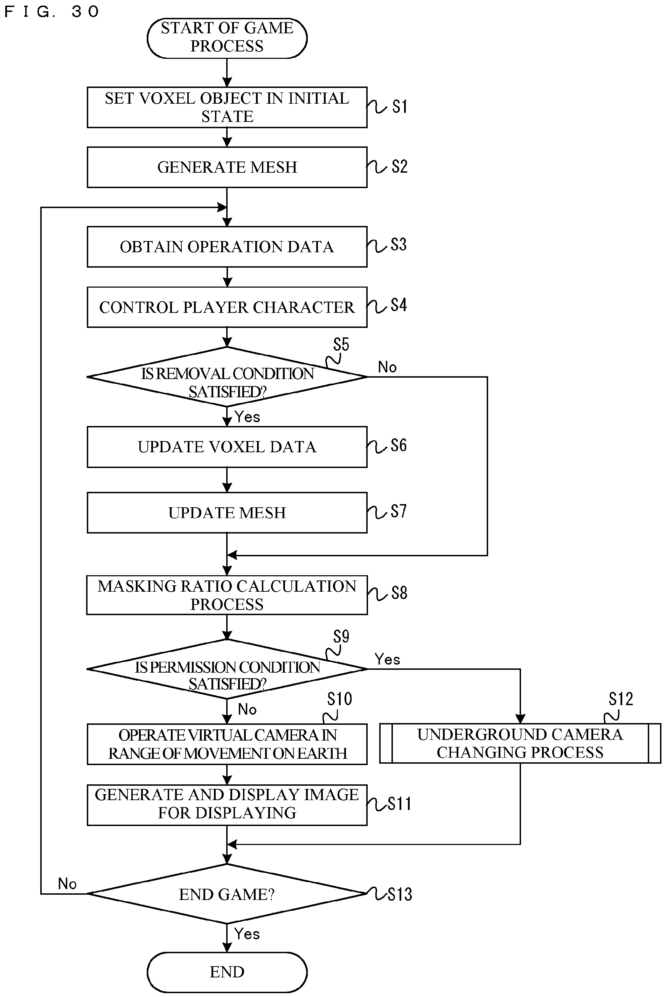

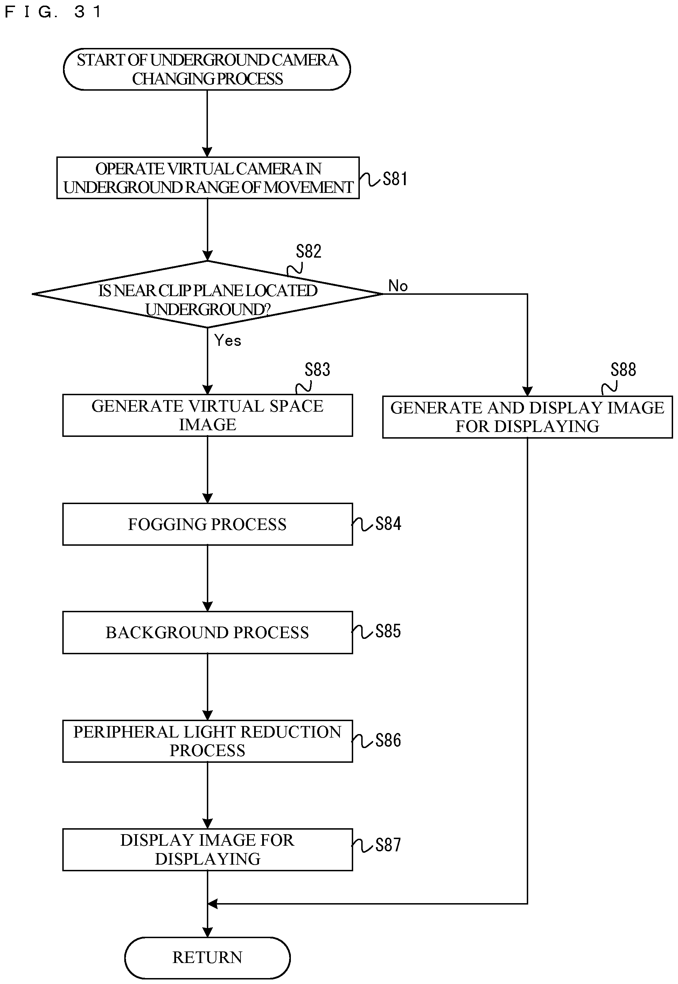

The game program Pa is for executing a game process (specifically, the game process shown in FIGS. 30 and 31) of the present invention.

The voxel space data Da specifies voxels that are set in the game space. Specifically, the voxel space data Da indicates the length of an edge of each voxel, and the orientation of each edge of the voxel in the game space. In the case in which voxels are set only in part of the game space, the voxel space data Da includes data indicating the location and size of a space in which voxels are set (e.g., a voxel space) (e.g., data indicating a range of the game space in which voxels are set).

The voxel object data Db indicates a voxel object that is provided in the game space. Specifically, the voxel object data Db includes voxel data Db1 for each unit region in all or part of the game space.

The mesh data Dc indicates a mesh that is set for a voxel object which is provided in the game space. The mesh data Dc includes, for example, data indicating the vertices of a mesh.

The operation data Dd is obtained, as appropriate, from each of the left controller 3 and/or the right controller 4 and the main body apparatus 2. As described above, the operation data Dd obtained from each of the left controller 3 and/or the right controller 4 and the main body apparatus 2 includes information about an input from each input section (specifically, each button, an analog stick, or a touch panel) (specifically, information about an operation). In the present invention, data is obtained from each of the left controller 3 and/or the right controller 4 and the main body apparatus 2. The obtained data is used to update the operation data Dd as appropriate. Note that the operation data Dd may be updated for each frame that is the cycle of a process (to be described below) executed in the game system 1, or may be updated each time operation data is obtained.

The player character data De indicates the place and position of the player character PC placed in the virtual space, the movement and state in the virtual space of the player character PC, and the like.

The virtual camera data Df indicates the location, orientation, state, and the like of the virtual camera C provided in the game space.

The destruction range data Dg indicates a destruction range that is set when a terrain object TO is broken by the player character PC.

The masking ratio data Dh indicates the proportion of a surrounding around a location based on the player character PC that is masked by another object(s) including the terrain object TO.

The virtual space image data Di indicates an image of the game space as viewed from the virtual camera C, and serves as a frame buffer for rendering an image of the game space. The image-for-displaying data Dj indicates an image that is displayed on a display device (e.g., the display 12).

The image data Dk indicates images of the player character PC, other objects, various effects, a field, a background image, and the like that are provided in the game space.

Note that in addition to the data shown in FIG. 29, the game system 1 stores, for example, data of the above property information and texture information as data that is previously stored in the game system 1 before a game process is executed.

FIG. 30 is a flowchart showing an example of a flow of a game process that is executed in the game system 1. FIG. 31 is a subroutine showing an example of an underground camera changing process of step S12 in the flowchart of FIG. 30. In the present invention, a series of steps shown in FIGS. 30 and 31 are executed by the processor 81 executing the game program. The game processes of FIGS. 30 and 31 are started with any suitable timing. As an example, the game processes of FIGS. 30 and 31 are started according to an instruction to start a game that is provided by the user during execution of the game program.

Note that in the present embodiment, it is assumed that the processor 81 of the main body apparatus 2 executes the game program stored in the game system 1 to execute each step of FIGS. 30 and 31. Note that in another exemplary embodiment, a portion of the steps may be executed by a processor (e.g., a dedicated circuit) other than the processor 81. In the case in which the game system 1 can communicate with another information processing device (e.g., a server), a portion of the steps of FIGS. 30 and 31 may be executed by the information processing device. In other words, the steps of FIGS. 30 and 31 may be executed by a plurality of information processing devices including the main body apparatus 2 working together. The steps of FIGS. 30 and 31, which are merely for illustrative purposes, may be executed in a different order, or another step may be executed in addition to (or instead of) each step, if a similar effect is obtained.

The processor 81 executes the steps of FIGS. 30 and 31 using a memory (e.g., the DRAM 85). Specifically, the processor 81 stores information (e.g., data) obtained in each process step into a memory, and reads and uses the information from the memory when the information is required in a subsequent process step.

In FIG. 30, the processor 81 sets a voxel object in an initial state in the game space (step S1), and proceeds to the next step. Specifically, the processor 81 obtains voxel data indicating the arrangement of a voxel object in an initial state, and stores (e.g., writes) all or a portion of the obtained voxel data as the voxel object data Db into the DRAM 85. Note that the voxel data indicating the arrangement of a voxel object in an initial state is, for example, stored in a storage medium attached to the slot 23 of the main body apparatus 2.

Note that voxel data that is written as the voxel object data into the DRAM 85 may be voxel data corresponding to a partial range that is used in generation of a game image, of the voxel data corresponding to the entire range of the game space. For example, the processor 81 may generate an image of an object using voxel data corresponding to only a partial range of the game space (e.g., a range within a predetermined distance from the location of a virtual camera). In that case, the voxel object data Db may include voxel data within that range. When voxel data corresponding to a partial range of the game space is written, a process similar to step S1 is executed with appropriate timing (e.g., at a timing when the location of the virtual camera is moved by at least a predetermined distance) during execution of steps S3 to S13 to be described below.

Next, the processor 81 generates a mesh for the voxel object (step S2), and proceeds to the next step, in which the processor 81 starts a game, and repeatedly executes steps S3 to S12 in the game. A mesh is generated by the above method. Here, the processor 81 generates a mesh based on the voxel object data stored in the DRAM 85. As a result of step S2, a voxel object such as a terrain object TO is constructed in the game space.

Next, the processor 81 obtains data corresponding to the user's operation from the left controller 3, the right controller 4, and/or the main body apparatus 2, updates the operation data Dd (step S3), and proceeds to the next step.

Next, the processor 81 controls an action of the player character PC appearing in the game space (step S4), and proceeds to the next step. For example, the processor 81 controls the player character PC's action based on the operation data obtained in step S3, and updates the player character data De. When, in addition to the player character PC, another character is placed, the processor 81 also controls that character's action based on an algorithm specified in the game program.

Next, the processor 81 determines whether or not a removal condition for removal of at least a portion of the voxel object is satisfied (step S5). For example, if the player character PC has hit the terrain object TO, the processor 81 sets a location where the terrain object TO has been hit and a surrounding range as a destruction range, updates the destruction range data Dg, breaks the terrain object TO (voxel object) present within the destruction range, and removes the broken portion. As an example, in order to represent a state that the destruction range has been broken, the densities indicated by the voxel data of at least a portion of the voxels included in the destruction range are set to zero, whereby the terrain object TO in the destruction range is removed. Therefore, if a voxel(s) of the voxel object is included in the destruction range hit by the player character PC, the result of the determination by the processor 81 is step S5 is positive. If the removal condition is satisfied, the processor 81 proceeds to step S6. Otherwise, i.e., if the removal condition is not satisfied, the processor 81 proceeds to step S8.

In step S6, the processor 81 updates the voxel data related to the voxel object that satisfies the removal condition, and proceeds to the next step. For example, in order to remove at least a portion of the voxel object that satisfies the removal condition, the processor 81 changes the densities of voxels in a portion hit by the player character PC and a surrounding portion, and updates the voxel data Db1 corresponding to each voxel. The processor 81 reduces the densities of voxels around the destruction range to be removed (e.g., a range affected by the hit) (provided that the reduced density is at least zero), and thereby removes the terrain object TO from the voxels around the destruction range. Specifically, the processor 81 updates the voxel object data Db stored in the DRAM 85 such that the density data is changed for the voxel data of the voxels in the range to be removed and a surrounding portion. Note that the processor 81 may update the density data such that the density indicates a value less than the reference value. For example, the processor 81 may set the densities of voxels in a portion (destruction range) hit by the player character PC to zero, and may reduce the densities of voxels in a surrounding region by a predetermined value.

Next, in step S7, the processor 81 updates the mesh for the voxel object whose voxel data has been changed in step S6, and proceeds to step S8. Specifically, the processor 81 generates a mesh for the voxel object that satisfies the removal condition, based on the voxel object data Db updated in step S6. Thus, a mesh for the terrain object TO can be dynamically changed in a game. Note that the processor 81 updates the mesh data Dc stored in the DRAM 85 such that the mesh data indicates the newly generated mesh.

In step S8, the processor 81 executes a masking ratio calculation process, and proceeds to the next step. For example, the processor 81 obtains images of the game world in six views in the upward/downward, left/right, and forward/backward directions obtained from an imaging location based on the location of the player character PC, calculates the masking ratio of the player character PC based on the images, and updates the masking ratio data Dh. Note that in step S8, the six views may be processed, one view for each frame, and a process using a comprehensive masking ratio may be executed for subsequent frames. The method for calculating the masking ratio is similar to the calculation method described with reference to FIG. 22, and therefore, is not here described in detail.

Next, the processor 81 determines whether or not the masking ratio calculated in step S8 satisfies the underground camera permission condition (step S9). For example, if the masking ratio calculated in step S8 is greater than or equal to a threshold, the processor 81 determines that the positional relationship between the player character PC and the terrain object TO around the player character PC satisfies the underground camera permission condition. If the masking ratio does not satisfy the underground camera permission condition, the processor 81 proceeds to step S10. Otherwise, i.e., if the masking ratio satisfies the underground camera permission condition, the processor 81 proceeds to step S12.

In step S10, the processor 81 moves the virtual camera C in the range of movement on the earth, and proceeds to the next step. For example, the processor 81 calculates a place distance from the player character PC based on a direction in which the virtual camera C is located with respect to the player character PC with reference to the player character data De, and sets the location and direction of the virtual camera C based on the place direction and the place distance. If the set location is present on or inside the terrain object TO, the processor 81 changes the location to the outside of the terrain object TO. Therefore, the virtual camera C is moved in the range of movement on the earth. Here, the range of movement on the earth is the range of movement described with reference to the upper figure of FIG. 21, and a three-dimensional surface excluding an overlapping portion with the terrain object TO. The processor 81 moves the virtual camera C in the range of movement on the earth, based on the user's operation indicted by the operation data Dd, and updates the virtual camera data Df.

Next, the processor 81 generates an image for displaying based on a game image of the game space, displays the image for displaying on a display device (step S 11), and proceeds to step S13. For example, the processor 81 generates a game space including a voxel object (the terrain object TO), the player character PC, other objects (e.g., other characters), an effect, a background, and the like, based on the voxel space data Da, the voxel object data Db, the mesh data Dc, the player character data De, the image data Dk, and the like. Note that an image of a voxel object is generated according to the abovementioned method using the voxel object data Db and the mesh data Dc. An image of the player character PC is generated using the player character data De. The processor 81 also places the virtual camera C in the game space, based on the virtual camera data Df, generates a game image captured by the virtual camera C, and stores the game image into the virtual space image data Di. Note that when at least a portion of the player character PC is masked by the surface of the terrain object TO that faces front, the masked portion of the player character PC is displayed as a silhouette image. Thereafter, the processor 81 generates an image for displaying based on the game image, stores the image for displaying into the image-for-displaying data Dj, and displays the image for displaying on a display device. Note that if the result of step S9 is negative in a game, step S11 is repeatedly executed at a rate of once per predetermined time (e.g., a 1-frame period).

If it is determined in step S9 that the masking ratio does not satisfy the underground camera permission condition, the processor 81 executes the underground camera changing process (step S12), and proceeds to step S13. The underground camera changing process of step S12 will be described below with reference to FIG. 31.

In FIG. 31, the processor 81 moves the virtual camera C in the underground range of movement (step S81), and proceeds to the next step. For example, the processor 81 calculates the place distance of the virtual camera C from the player character PC, based on the direction in which the virtual camera C is located with respect to the player character PC, with reference to the player character data De, and sets the location and orientation of the virtual camera C, based on the place direction and the place distance. Even if the location of the virtual camera C is present on or inside the terrain object TO, the location is not changed. This allows the virtual camera C to move in the underground range of movement. Here, the underground range of movement is the range of movement that is described with reference to the lower figure of FIG. 21, and has a shape which overlaps with the inside of the terrain object TO even when overlapping with the terrain object TO. The processor 81 moves the virtual camera C in the underground range of movement, based on the user's operation indicated by the operation data Dd, and updates the virtual camera data Df. Note that in step S81, when the virtual camera C is located outside the terrain object TO, the virtual camera C may be forced to move into the terrain object TO.

Next, the processor 81 determines whether or not all of the four corner points P1 to P4 of the near clip plane of the virtual camera C are located inside the terrain object TO (step S82). If all of the four corner points P1 to P4 of the near clip plane of the virtual camera C are located inside the terrain object TO, the processor 81 proceeds to step S83. Otherwise, i.e., if any of the four corner points P1 to P4 of the near clip plane of the virtual camera C is located outside the terrain object TO, the processor 81 proceeds to step S88.

In step S83, the processor 81 generates a game image of the game space (virtual space image), and proceeds to the next step. For example, the processor 81 generates a game space including a voxel object (the terrain object TO), the player character PC, other objects (e.g., other characters), an effect, a background, and the like, based on the voxel space data Da, the voxel object data Db, the mesh data Dc, the player character data De, the image data Dk, and the like. Note that an image of a voxel object is generated according to the abovementioned method using the voxel object data Db and the mesh data Dc. An image of the player character PC is generated using the player character data De. The processor 81 also places the virtual camera C in the game space, based on the virtual camera data Df, generates a game image captured by the virtual camera C, and stores the game image into the virtual space image data Di. Note that when at least a portion of the player character PC is masked by the surface of the terrain object TO that faces front, the masked portion of the player character PC is displayed as a silhouette image.

Next, the processor 81 executes a fogging process (step S84), and proceeds to the next step. For example, the processor 81 executes a post-process of applying a fogging effect to an image of the game space (virtual space image) stored in the virtual space image data Di, depending on the distance from the virtual camera C. Note that step S84 is similar to the fogging process described with reference to FIG. 27, and is not here described in detail.

Next, the processor 81 executes a background process (step S85), and proceeds to the next step. For example, the processor 81 executes, on an image of the game space (virtual space image) stored in the virtual space image data Di, a post-process of changing the display form of at least a portion (e.g., a background portion or a portion in which the effect E is displayed, of the game space) of the non-front portions of the terrain object TO that are not rendered. Note that step S85 is similar to the process of changing the display form described with reference to FIG. 28, and is not here described in detail.

Next, the processor 81 executes a peripheral light reduction process (step S86), and proceeds to the next step. For example, the processor 81 executes, on an image of the game space (virtual space image) stored in the virtual space image data Di, a post-process of reducing visibility by reducing light at an edge portion of the display region, e.g., making the edge portion darker, to generate the light reduced region F (see FIG. 25). Thereafter, the processor 81 updates the image-for-displaying data Dj using the image of the game space subjected to the post-processes of steps S84 to S86.

Next, the processor 81 executes a process of displaying an image for displaying stored in the image-for-displaying data Dj on a display device (step S87), and ends the subroutine. Note that if the result of step S82 is positive in a game, steps S83 to S87 are repeatedly executed at a rate of once per predetermined time (e.g., a 1-frame period).

If it is determined in step S82 that any of the four corner points P1 to P4 of the near clip plane of the virtual camera C is located outside the terrain object TO, the processor 81 generates an image for displaying based on a game image of the game space and displays the image for displaying on a display device (step S88), and ends the subroutine. Note that step S88 is similar to step S11, and is not here described in detail.

Referring back to FIG. 30, in step S13, the processor 81 determines whether or not to end the game. In step S13, the game process is ended, for example, if a condition for ending the game process is satisfied, the user has performed an operation of ending the game process, or the like. If the processor 81 does not determine to end the game process, the processor 81 returns to step S3, and repeats the process. Otherwise, i.e., if the processor 81 determines to end the game process, the processor 81 ends the flowchart. Following this, steps S3 to S13 are repeated executed until the processor 81 determines to end the game process in step S13.

Thus, in the present invention, the virtual camera C can be placed inside the terrain object TO, based on the location of the player character PC, and therefore, the visibility of an image for displaying can be improved according to a situation of the player character PC. In addition, in the present invention, when the virtual camera C is placed inside the terrain object TO, the display changing process of an image for displaying based on an image of the game space is executed, and therefore, an image for displaying that is appropriately rendered can be displayed even when the virtual camera C is located inside the terrain object TO.

Although in the foregoing, if the positional relationship between the player character PC and the terrain object TO around the player character PC satisfies the underground camera permission condition, the virtual camera C is controlled without the avoidance control to prevent the virtual camera C from being located inside the terrain object TO, the presence or absence of the avoidance control may be switched in other manners. For example, whether or not to execute the avoidance control may be determined according to the user's operation of choosing the presence or absence of the avoidance control.

In conventional games, a virtual camera may be buried underground due to a bug that is not intended by a developer or the like, which is an example of a failure of the avoidance control to prevent a virtual camera from being buried underground. The present invention does not assume such an accidental phenomenon in which a virtual camera is buried underground, and intentionally permits a virtual camera to be located inside the terrain object TO, based on whether or not the underground camera permission condition is satisfied, which is a totally novel technical feature.

In addition, the terrain object TO in which the virtual camera C may be located may not be a voxel object. Even in the case in which the virtual camera C is located inside the terrain object TO that is set based on other data forms such as a polygon, a similar effect can be obtained.

The game system 1 may be any suitable apparatus, including a handheld game apparatus, or any suitable handheld electronic apparatus (a personal digital assistant (PDA), mobile telephone, personal computer, camera, tablet computer, etc.), etc. In that case, an input apparatus for performing an operation of causing a player character PC to perform an action may be, instead of the left controller 3 or the right controller 4, another controller, mouse, touchpad, touch panel, trackball, keyboard, directional pad, slidepad, etc.

In the foregoing, the information processes are performed in the game system 1. Alternatively, at least a portion of the process steps may be performed in another apparatus. For example, when the game system 1 can also communicate with another apparatus (e.g., another server, another information processing apparatus, another image display apparatus, another game apparatus, another mobile terminal, etc.), the process steps may be executed in cooperation with the second apparatus. By thus causing another apparatus to perform a portion of the process steps, a process similar to the above process can be performed. The above information process may be executed by a single processor or a plurality of cooperating processors included in an information processing system including at least one information processing apparatus. In the above example, the information processes can be performed by the processor 81 of the game system 1 executing predetermined programs. Alternatively, all or a portion of the above processes may be performed by a dedicated circuit included in the game system 1.

Here, according to the above variation, the present invention can be implanted in a so-called cloud computing system form or distributed wide-area and local-area network system forms. For example, in a distributed local-area network system, the above process can be executed by cooperation between a stationary information processing apparatus (a stationary game apparatus) and a mobile information processing apparatus (handheld game apparatus). It should be noted that, in these system forms, each of the above steps may be performed by substantially any of the apparatuses, and the present invention may be implemented by assigning the steps to the apparatuses in substantially any manner.

The order of steps, setting values, conditions for determination, etc., used in the above information process are merely illustrative, and of course, other order of steps, setting values, conditions for determination, etc., may be used to implement the present invention.

The above programs may be supplied to the game system 1 not only through an external storage medium, such as an external memory, but also through a wired or wireless communication line. The program may be previously stored in a non-volatile storage device in the game system 1. Examples of an information storage medium storing the program include non-volatile memories, and in addition, CD-ROMs, DVDs, optical disc-like storage media similar thereto, and flexible disks, hard disks, magneto-optical disks, and magnetic tapes. The information storage medium storing the program may be a volatile memory storing the program. Such a storage medium may be said as a storage medium that can be read by a computer, etc. (computer-readable storage medium, etc.). For example, the above various functions can be provided by causing a computer, etc., to read and execute programs from these storage media.

While the present invention has been described above in detail, the foregoing description is in all aspects illustrative and not restrictive. It should be understood that numerous other modifications and variations can be devised without departing from the scope of the present invention. It should be understood that those skilled in the art could carry out the literal and equivalent scope of the present invention based on the description of the present invention and common technical knowledge. It should be understood throughout the present specification that expression of a singular form includes the concept of its plurality unless otherwise mentioned. Specifically, articles or adjectives for a singular form (e.g., "a", "an", "the", etc., in English) include the concept of their plurality unless otherwise mentioned. It should also be understood that the terms as used herein have definitions typically used in the art unless otherwise mentioned. Thus, unless otherwise defined, all scientific and technical terms have the same meanings as those generally used by those skilled in the art to which the present invention pertain. If there is any inconsistency or conflict, the present specification (including the definitions) shall prevail.

As described above, the present invention can, for example, be used as an information processing program, information processing system, information processing apparatus, and information processing method that are capable of displaying an image whose visibility is improved according to a situation of a player character.

## Claims

1. An information processing program to be executed by a computer (81) of an information processing apparatus (2), wherein the information processing program causes the computer to function as:
determination means (81, S8, S9) for determining whether or not a positional relationship between a player character (PC) and a terrain object (TO) around the player character in a virtual space satisfies a permission condition;
virtual camera control means (81, S10, S81) for, if the positional relationship does not satisfy the permission condition, then when a virtual camera approaches the terrain object, executing avoidance control to prevent the virtual camera from being located inside the terrain object, and if the positional relationship satisfies the permission condition, controlling the virtual camera without executing the avoidance control;
terrain rendering means (81, S11, S87, S88) for rendering a portion of a surface of the terrain object that faces front with respect to the virtual camera; and
image outputting means (81, S11, S87, S88) for executing a process of outputting, to a display device (12), an image for displaying based on a rendered image of the virtual space including the terrain object.

2. The information processing program according to claim 1, wherein
the determining means determines that the positional relationship satisfies the permission condition when the proportion of a surrounding of a position based on the player character that is masked by another object including the terrain object is greater than or equal to a threshold.

3. The information processing program according to claim 1, wherein
the determining means determines whether or not the positional relationship satisfies the permission condition, based on a distance between the player character and another object including the terrain object.

4. The information processing program according to claim 1, wherein
the determining means determines whether or not the positional relationship satisfies the permission condition with higher priority given to the positional relationship in a vertical direction of the virtual space than that given to the positional relationship in a horizontal direction of the virtual space.

5. The information processing program according to any one of claims 1 to 4, wherein
the information processing program causes the computer to further function as:
internal determining means (81, S82) for determining whether or not the virtual camera is located inside the terrain object; and
display changing means (81, S84 to S86) for executing a display changing process of changing the image for displaying when determining that the virtual camera is located inside the terrain object.

6. The information processing program according to claim 5, wherein
as the display changing process, the display changing means executes a post-process on the rendered image of the virtual space including the terrain object.

7. The information processing program according to claim 5, wherein
as the display changing process, the display changing means places an object for changing in the virtual space.

8. The information processing program according to claim 5, wherein
as the display changing process, the display changing means reduces visibility of an object located far away from the virtual camera.

9. The information processing program according to claim 8, wherein
as the display changing process, the display changing means fogs the object further away from the virtual camera such that the visibility thereof is reduced to a greater extent.

10. The information processing program according to claim 5, wherein
as the display changing process, the display changing means changes a display form of at least a portion of a non-front portion that is a portion of the surface of the terrain object which faces front and is not rendered.

11. The information processing program according to claim 10, wherein
as the display changing process, the display changing means changes the display form of at least a portion of the non-front portion by making a color of a background of the virtual space darker.

12. The information processing program according to claim 10, wherein
the display changing means changes a display form of an effect in the virtual space by the display changing process such that the effect is not displayed in the non-front portion.

13. The information processing program according to claim 8, wherein
as the display changing process, the display changing means highlights a contour of a cavity inside the terrain object.

14. The information processing program according to claim 5, wherein
as the display changing process, the display changing means reduces visibility of an edge portion of the image for displaying.

15. The information processing program according to claim 5, wherein
the internal determining means determines whether or not the virtual camera is located inside the terrain object, based on whether or not four corners of a near clip plane of the virtual camera are located inside the terrain object.

16. The information processing program according to claim 1, wherein
the virtual camera control means automatically moves the virtual camera such that the virtual camera is located inside the terrain object when the positional relationship satisfies the permission condition.

17. The information processing program according to claim 1, wherein
the information processing program causes the computer to further function as:
see-through display means (81, S11, S87, S88) for, when the player character is masked by a portion of the surface of the terrain object that faces front when viewed from the virtual camera, displaying the player character in a manner that allows the player character to be seen through the portion of the surface.

18. The information processing program according to claim 1, wherein
the information processing program causes the computer to further function as:
player character action control means (81, S4) for causing the player character to perform an action of breaking and/or deforming at least a portion of the terrain object, based on a user's operation input.

19. An information processing apparatus comprising:
determining means for determining whether or not a positional relationship between a player character and a terrain object around the player character in a virtual space satisfies a permission condition;
virtual camera control means for, if the positional relationship does not satisfy the permission condition, then when a virtual camera approaches the terrain object, executing avoidance control to prevent the virtual camera from being located inside the terrain object, and if the positional relationship satisfies the permission condition, controlling the virtual camera without executing the avoidance control;
terrain rendering means for rendering a portion of a surface of the terrain object that faces front with respect to the virtual camera; and
image outputting means for executing a process of outputting, to a display device, an image for displaying based on a rendered image of the virtual space including the terrain object.

20. An information processing system comprising:
determining means for determining whether or not a positional relationship between a player character and a terrain object around the player character in a virtual space satisfies a permission condition;
virtual camera control means for, if the positional relationship does not satisfy the permission condition, then when a virtual camera approaches the terrain object, executing avoidance control to prevent the virtual camera from being located inside the terrain object, and if the positional relationship satisfies the permission condition, controlling the virtual camera without executing the avoidance control;
terrain rendering means for rendering a portion of a surface of the terrain object that faces front with respect to the virtual camera; and
image outputting means for executing a process of outputting, to a display device, an image for displaying based on a rendered image of the virtual space including the terrain object.

21. An information processing method comprising:
a determining step for determining whether or not a positional relationship between a player character and a terrain object around the player character in a virtual space satisfies a permission condition;
a virtual camara control step for, if the positional relationship does not satisfy the permission condition, when a virtual camera approaches the terrain object, executing avoidance control to prevent the virtual camera from being located inside the terrain object, and if the positional relationship satisfies the permission condition, controlling the virtual camera without executing the avoidance control;
a terrain rendering step for rendering a portion of a surface of the terrain object that faces front with respect to the virtual camera; and
an image outputting step for executing a process of outputting, to a display device, an image for displaying based on a rendered image of the virtual space including the terrain object.
